# EUROPÄISCHE PATENTSCHRIFT

(11) **EP 2 527 565 B1**
(45) Veröffentlichungstag und Bekanntmachung des Hinweises auf die Patenterteilung: **03.09.2014**
(21) Anmeldenummer: 12168019.3
(22) Anmeldetag: 09.01.2012
(51) Int. Cl.: F16B 7/04, E04G 7/20, E04G 7/30, F16B 7/20

(54) **Gerüststiel**
Scaffolding post
Montant

(30) Priorität: 05.04.2011 DE 102011001796
(43) Veröffentlichungstag der Anmeldung: 28.11.2012
(62) Teilanmeldung aus: 12704661.3
(73) Patentinhaber: Wilhelm Layher Verwaltungs-GmbH, 74363 Güglingen-Eibensbach (DE)
(72) Erfinder:
(74) Vertreter: Geitz Truckenmüller Lucht

(56) Entgegenhaltungen:
- EP-A1- 1 911 907
- DE-U1- 20 200 728
- FR-A1- 2 529 931
- GB-A- 2 369 665
- JP-U- 50 023 924

## Beschreibung

Die Erfindung betrifft einen Gerüststiel aus Metall, vorzugsweise aus Stahl, mit einem Rohr und einem daran einteilig angeformten, rohrförmigen Rohrverbinder, die sich jeweils in Richtung einer Längsachse des Gerüststiels erstrecken und die koaxial zu der Längsachse ausgebildet sind, insbesondere wobei das Rohr und der Rohrverbinder einteilig aus einem Rundrohr hergestellt sind, wobei das Rohr ein dem Rohrverbinder zugeordnetes erstes Rohrende, ein davon weg weisendes freies zweites Rohrende, einen Rohraußendurchmesser, einen Rohrinnendurchmesser und eine Rohrwanddicke aufweist, und wobei das Rohr an seinem freien Rohrende eine ringförmige Rohr-Stütz-Stirnfläche zum vertikalen Abstützen des Gerüststiels, vorzugsweise auf einer ringförmigen Stiel-Aufstell-Stirnfläche eines weiteren Gerüststiels, und einen eine Länge aufweisenden Rohrendabschnitt aufweist, der sich ausgehend von der Rohr-Stütz-Stirnfläche in Richtung des Rohrverbinders erstreckt und der einen Rohr-Aufsteckbereich zum Aufstecken des Rohrs auf einen Rohrverbinder eines weiteren, beispielsweise erfindungsgemäßen oder gleichartigen bzw. herkömmlichen, Gerüststiels ausbildet, und wobei der Rohrverbinder ein freies erstes Rohrverbinderende, ein zweites Rohrverbinderende und eine Rohrverbinderlänge aufweist, wobei die Rohrverbinderenden einen Rohrverbinder-Einsteckbereich zum Einstecken des Rohrverbinders in ein auf diesen aufsteckbares bzw. aufgestecktes Rohr eines weiteren, beispielsweise erfindungsgemäßen oder gleichartigen bzw. herkömmlichen, Gerüststiels begrenzen, und wobei der Rohr-Aufsteckbereich des Rohrs eine Länge aufweist, die der Länge des Rohrverbinder-Einsteckbereichs des Rohrverbinders im wesentlichen entspricht und/oder die im wesentlichen einer wirksamen Rohrverbinderlänge entspricht, und wobei der Rohrverbinder in dem Rohrverbinder-Einsteckbereich einen Rohrverbinder-Außendurchmesser aufweist, der gegenüber einem von dem Rohrendabschnitt in dem Rohr-Aufsteckbereich des Rohrs aufgespannten Rohrinnendurchmesser des Rohrs verringert ist, vorzugsweise wobei der Rohrverbinder im wesentlichen über seine gesamte Rohrverbinderlänge kreisringförmige Außenquerschnitte aufweist, deren Außendurchmesser gleich oder kleiner als der maximale Rohrverbinder-Außendurchmesser in dem Rohrverbinder-Einsteckbereich sind, und wobei in einem Übergangsbereich zwischen dem Rohrverbinder und dem Rohr ein Anschlag in Form einer senkrecht zu der Längsachse des Gerüststiels verlaufenden, um die Längsachse umlaufenden, ringförmigen Stiel-Aufstell-Stirnfläche ausgebildet ist, so dass auf den Gerüststiel der weitere Gerüststiel bis zu dem Anschlag wiederlösbar mit einem radialen Spalt bzw. Spiel, vorzugsweise von wenigstens etwa 2,5 bis 3,5 Prozent des Rohrverbinder-Außendurchmessers und/oder von wenigstens etwa 1,0 mm oder von wenigstens etwa 1,3 mm, aufsteckbar bzw. aufgesteckt, insbesondere dort bzw. auch dort relativ zu dem weiteren Gerüststiel um die Längsachse des Gerüststiels frei drehbar ist, und wobei der Rohrverbinder ferner einen zwischen der Stiel-Aufstell-Stirnfläche und dem freien Rohrverbinderende angeordneten Rohrverbinder-Abschnitt hat, der Stützflächen zur seitlichen Abstützung des auf den Rohrverbinder aufsteckbaren bzw. aufgesteckten weiteren Gerüststiels aufweist, die in einem der wirksamen Rohrverbinderlänge entsprechenden Abstand von der Stiel-Aufstell-Stirnfläche angeordnet sind und/oder die sich bis hin zu einem der wirksamen Rohrverbinderlänge entsprechenden Abstand von der Stiel-Aufstell-Stirnfläche erstrecken, und wobei die wirksame Rohrverbinderlänge entweder im wesentlichen der Rohrverbinderlänge entspricht oder gegenüber der Rohrverbinder-länge um die Länge einer an dem freien Rohrverbinderende angeordneten, vorzugsweise angeformten, sich in Richtung des freien Rohrverbinderendes verjüngenden, optional vorsehbaren, Einführ-Querschnittsverjüngung reduziert ist, und wobei der Rohr-Aufsteckbereich des Rohrs eine Anzahl von wenigstens zwei, vorzugsweise von wenigstens drei, sich jeweils in Richtung, vorzugsweise parallel zu, der Längsachse des Gerüststiels erstreckende Eindrückungen aufweist, die jeweils mit einer Rohrinnenquerschnitts-Verjüngung ausgebildet sind und die in Umfangsrichtung um die Längsachse des Gerüststiels regelmäßig und/oder mit gleichem Abstand verteilt angeordnet sind und die sich jeweils in dem Rohr-Aufsteckbereich, unmittelbar ausgehend von der Rohr-Stütz-Stirnfläche in Richtung des Rohrverbinders durchgehend über eine Länge erstrecken, die im wesentlichen oder wenigstens der wirksamen Rohrverbinderlänge bzw. der Rohr-Aufstecklänge entspricht und die mindestens das Dreifache des maximalen Rohrverbinder-Außendurchmessers und/ oder mindestens 150 mm beträgt, und wobei die in dem Rohr-Aufsteckbereich in das Innere des Rohrs vorstehenden Eindrückungen innere Stützflächen zur seitlichen Abstützung des Rohrs an dem in das Rohr einsteckbaren bzw. eingesteckten Rohrverbinder des weiteren Gerüststiels aufweisen.

Ein derartiger Gerüststiel ist beispielsweise aus der DE 101 12 370 A1, der parallelen WO 02/066768 A1 und der parallelen DE 202 21 675 U1 und der EP 1 911 907 A1 der Anmelderin bekannt geworden. Derartige, auch als Gerüstständer, Gerüstholme oder Hohlprofilstäbe bezeichnete Gerüststiele werden in der Praxis beispielsweise als Bestandteil eines Gerüstrahmens eines auch als Systemgerüst bezeichneten Rahmengerüsts eingesetzt. Dieses Rahmengerüst ist seit vielen Jahren auch allgemein als das LAYHER-Blitz-Gerüst bekannt. Derartige Gerüststiele bzw. die damit gebildeten Gerüstrahmen sind in einer sehr großen Anzahl im Einsatz.

Andere ähnliche oder gleichartige Gerüststiele sind seit vielen Jahrzehnten im Gerüstbau üblich, darunter auch als Vertikalstiele bezeichnete Gerüststiele eines sogenannten Modulgerüsts, bei denen in Axialrichtung in einem Rastermaß zueinander beabstandet Anschlusselemente, beispielsweise Rosetten, insbesondere Lochscheiben, an dem Gerüstrohr befestigt sind, um dort Anschluss-, Halte- und/oder Tragelemente, beispielsweise Längsriegel, Querriegel und/oder Diagonalen anschließen zu können. Ein derartiges Modulgerüst ist seit vielen Jahren als das LAYHER-Allround Gerüstsystem bekannt. Die Stiele dieses Modulgerüsts bestehen aus Stahl der Qualität St37 und weisen eine Rohrwandstärke von etwa 3,2 mm auf.

Die ebenfalls aus Stahl der Qualität St37 aktuell hergestellten Holme bzw. Stiele des LAYHER Blitz-Gerüsts weisen im Unterschied dazu eine reduzierte Rohrwandstärke von nur etwa 2,7 mm auf.

Um eine Kompatibilität und Kombination bzw. Vermischung der unterschiedliche Rohrwandstärken aufweisenden Stiele untereinander bei entsprechend guten Tragfähigkeiten bzw. statischen Kennwerten zu gewährleisten, wurde gemäß den eingangs erwähnten Druckschriften vorgeschlagen, den unteren Endbereich der Rohre zumindest bereichsweise mit wenigstens einer Querschnittsverjüngung zu versehen, derart, dass sich zwischen der Innenwandung des unteren Endbereichs im Bereich der Querschnittsverjüngung bei auf- bzw. aneinandergesteckten Hohlprofilstäben und der Außenwandung des aufgesteckten Hohlprofilstabes das zulässige oder ein kleineres Spaltmaß ergibt.

In der Praxis weisen die Hohlprofilstäbe vier gleiche Querschnittsverjüngungen in Form jeweils einer Eindrückung auf, die jeweils als ein in Längsrichtung des Hohlprofilstabes verlaufender Längsstreifen ausgebildet ist, wobei diese Querschnittsverjüngungen in Umfangsrichtung des Hohlprofilstabes rasterförmig in einem Umfangswinkel von jeweils 90 Grad zueinander beabstandet angeordnet sind.

Gemäß den eingangs erwähnten Druckschriften können die dort behandelten Querschnittsverjüngungen im wesentlichen in der Form der folgenden drei Alternativen ausgeführt sein: Gemäß einer ersten Alternative kann die als Eindrückung ausgebildete Querschnittsverjüngung als ein in Längsrichtung des Hohlprofilstabes verlaufender Längsstreifen ausgebildet sein, der in Umfangsrichtung des Hohlprofilstabes rasterförmig, insbesondere nach einem Umfangswinkel von jeweils 90, 60 oder 45 Grad oder kleiner angeordnet sein kann. Gemäß einer zweiten Alternative kann die Querschnittsverjüngung als umlaufende ringförmige Eindrückung ausgebildet sein, die jeweils sowohl am oberen Randbereich als auch, in einem Abstand von dem freien Rohrende, am unteren Randbereich des unteren Endbereichs des Rohrs vorhanden ist. Gemäß einer dritten Alternative kann die Querschnittsverjüngung als punktförmige Eindrückung ausgebildet sein, die wiederum sowohl jeweils am oberen Randbereich als auch, in einem Abstand von dem freien Rohrende, am unteren Randbereich des unteren Endbereichs umfangsmäßig in einem Raster von jeweils 90, 60 oder 45 Grad oder kleiner angeordnet sein kann.

Mit dem Ziel, das gleiche Problem zu lösen, also insbesondere leichtere, dünnwandigere Rohre in Kombination mit bisherigen, dickwandigeren Gerüstrohren bzw. Standrohen bei ausreichender Passgenauigkeit, guter Montier- bzw. Demontierbarkeit, gut zentriert und gerade bei entsprechend vorteilhafter Kippstabilität auszurichten, wurde gemäß der DE 101 11 279 A1 bzw. der parallelen EP 1 219 761 A2 vorgeschlagen, in dem zum Aufstecken verwendbaren Endbereich des Gerüstrohres in einem vertikalen Abstand zueinander jeweils eine Querschnittsverjüngung in Form einer um die Längsachse des Rohrs umlaufende Ring-Einprägung vorzusehen, wobei die untere Ring-Einprägung in einem vertikalen Abstand von der unteren umlaufenden Aufstellfläche des Gerüstrohrs angeordnet ist, damit der Außenumfang des Rohres in der stirnseitigen Aufstandsfläche erhalten bleibt und damit der Prägevorgang einfacher zu bewerkstelligen ist. Grundsätzlich wären jedoch auch nasenförmige oder rippenförmige, umfangsseitig verteilte Einprägungen denkbar, darunter auch sich über einen gewissen Abstand in axialer Richtung erstreckende Längsrippen.

Aus der DE 196 30 225 A1 ist ein Rohrsystem zur Anwendung in einer Gerüstkonstruktion mit mindestens zwei zusammengesteckten Rohren bekannt geworden, wobei eine erstes Ende eines der Rohre mit Spielraum in ein zweites Ende eines anderen der Rohre eingeschoben ist. Hierzu weist jedes Rohr an seinem unteren Aufsteckende eine Aufsteckmuffe mit einem gegenüber dem Rohrdurchmesser an dem anderen Rohrende gestreckten Durchmesser auf. An der Rohraußenseite des jeweiligen oberen Rohrendes sind über den Umfang in gleichen Umfangswinkeln von 90 Grad verteilt nach außen vorstehende, sich in Axialrichtung erstrecken Längsrippen vorgesehen. Um beide Rohre einander gegenseitig zu sichern, befinden sich an der Innenseite der gestreckten Wandung nach innen vorstehende, L-förmige Ausstülpungen, die ebenfalls über den Umfang in gleichen Umfangswinkeln von 90 Grad verteilt angeordnet sind. Die Längsrippen und die L-förmigen Ausstülpungen bilden zusammen eine bajonettartige Verbindung.

Aus der WO 83/02637 A, der parallelen CH 659 282 A5 und der parallelen EP 0 112 831 B1 geht eine Verbindungseinrichtung für langgestreckte Gerüstelemente eines Baugerüsts zur Verbindung eines Endes eines ersten Gerüstelements mit einem Ende eines zweiten Gerüstelements in aneinanderstoßender Anordnung hervor. Um eine stabile und gleichzeitig leicht zu errichtende und zu zerlegende Verbindungseinrichtung zu schaffen, sind die Verbindungsflächen derart dimensioniert, dass zwischen denselben ein Zwischenraum vorhanden ist, und dass nur eine der Verbindungsflächen mindestens eine Gruppe von mindestens drei peripher sowie symmetrisch gelegenen und einander radial gegenüberliegenden Teilen aufweist, welche von der Verbindungsfläche vorspringen und welche für die gegenüberliegende Verbindungsfläche kraftübertragende Abstützteile bilden, die in einem vorbestimmten gegenseitigen Abstand und außerdem in einer solchen Weise gelegen sind, dass die weibliche Komponente ein im wesentlichen hülsenförmiges Einsteckende aufweist und die männliche Komponente derart festlegt, dass der Zwischenraum im wesentlichen rings um die gesamte Verbindungsfläche der männlichen Komponente gleichmäßig ist. Konkret sind Ausgestaltungen offenbart, bei denen eine Hülse oder ein unteres Rohrende mit über den Umfang in gleichen Umfangsabständen verteilt angeordneten, längsovalen, lokalen Einpressungen versehen ist, die in zwei, einen vertikalen Abstand zueinander aufweisenden Umfangs-Gruppen jeweils gleich gestalteter Einpressungen angeordnet sind. Es ist auch eine weitere Ausführungsvariante offenbart, bei der in einem vergleichsweise großen Abstand zu dem eine weibliche Komponente bildenden freien Rohrende nur eine Anordnung derartiger Einpressungen über den Umfang verteilt vorgesehen ist, während die dort eingesteckte, über eine Aufstandsfläche vorstehende, zapfenartige, männliche Komponente sich konisch in Richtung des freien Einsteckendes des Zapfens verjüngt. Dabei ist zwischen der an dem freien Aufsteckende des auf der Aufstandsfläche aufstehenden Rohrs vorhandenen ringförmigen Rohr-Innenkante und dem unmittelbar gegenüber liegenden Zapfen ein Ringspalt ausgebildet. Ferner ist zwischen den in das Innere des Rohrs ragenden Innenflächen der in dem vertikalen Abstand zu dem freien Rohrende angeordneten lokalen Einpressungen und dem unmittelbar gegenüberliegenden Zapfen jeweils ein lokaler Spalt ausgebildet, der gleich groß ist wie der Ringspalt, so dass an diesen Stellen jeweils nur ein korrespondierendes, gleich großes, geringes Spiel zwischen dem Rohr und dem Zapfen möglich ist.

Aus der EP 0 004 806 A1 bzw. der parallelen AT-PS 360 733 ist eine Vorrichtung zur Verbindung von zwei rohrförmigen Elementen und entsprechend hergestellte Gerüstteile mit vorgefertigtem Rahmen bekannt geworden. Ein erstes Rohr und ein zweites Rohr sind zusammensteckbar ausgebildet. An dem unteren Ende einer männlichen Rohrkomponente sind in gleichen Umfangswinkeln zueinander drei längsgerichtete Nuten vorgesehen, die durch eine nach innen gerichtete Formänderung des Rohres gebildet sind, die in gleichen Umfangswinkeln zu einander angeordnet sind und die sich bis zu dem unteren Ende dieses Rohrs durchgehend erstrecken. Korrespondierend dazu sind an dem oberen Ende einer weiblichen Komponente, ebenfalls in gleichen Umfangswinkeln zueinander, wiederum drei längsgerichtete Nuten vorgesehen, die ebenfalls durch eine nach innen gerichtete Formänderung des Rohres gebildet sind, die jedoch in einem vertikalen Abstand zu dem oberen Rohrende dieses Rohrs angeordnet sind. Nach dem Einstecken der beiden Rohrenden ineinander bis zu einem durch eine nach innen gerichtete Formänderung gebildeten Innen-Anschlag des unteren Rohrs, erhält man eine formschlüssige, stabile, im wesentlichen spielfreie und verdrehsichere Rohrverbindung. Beispielsweise bedingt durch Verschmutzungen an den Verbindungsflächen kann es im Laufe der Zeit zu Schwierigkeiten beim Zusammenstecken und beim Wiederlösen der Rohrverbindung kommen. Auch ist nur ein Zusammenstecken der beiden Rohre in ganz bestimmten Winkeln relativ zueinander möglich.

Eine ähnliche Rohrverbindung mit denselben Nachteilen ist aus der GB 1 469 807 A bzw. der parallelen FR 2 273 220 A und der parallelen DE 25 23 879 bekannt geworden.

Aus der DE 195 47 382 A1 bzw. der parallelen EP 0 780 583 A1 ist eine Kupplung für die Verbindung von stabförmigen Teilen bekannt geworden. Dabei ist ein erstes, männliches Verbindungselement mit einem im Querschnitt zylinderförmigen Dorn und ein zweites, weibliches Verbindungselement in Form eines Rohrs mit einer zylinderförmigen Ausnehmung versehen. Der Außendurchmesser des vorderen Bereichs des Dorns ist wesentlich kleiner als der Innendurchmesser der Ausnehmung, während der Außendurchmesser des hinteren Bereichs des Dorns etwa dem Durchmesser der Ausnehmung entspricht. Zwischen dem vorderen Bereich und dem hinteren Bereich des Dorns ist ein konusartiges Zwischenstück vorgesehen. Das vordere Einsteckende des Dorns ist konusartig verjüngt ausgebildet. In der Ausnehmung des das weibliche Verbindungselement bildenden Rohrs ist an dessen Innenumfang ein separater umlaufender Innen-Ring befestigt, dessen Außendurchmesser etwa dem Innendurchmesser der Ausnehmung und dessen Innendurchmesser etwa dem Außendurchmesser des vorderen Bereichs der Dorns entspricht. Dieser Innen-Ring ist derart in einem Abstand von der Vorderkante des weiblichen Verbindungselements angeordnet, dass er nach Beendigung des Kupplungsvorganges den vorderen Bereich des Dorns umschließt. Im gekuppelten eingesteckten Zustand ist sowohl zwischen der Innenfläche des Innen-Rings und der korrespondierenden Außenfläche des vorderen Bereichs des Dorns als auch zwischen der Innenfläche des Rohrs an dessen vorderen Ende und der korrespondierenden Außenfläche des hinteren Bereichs des Dorns, jeweils eine verhältnismäßig enge, gleich dimensionierte Passung vorgesehen. Bei dieser Kupplung erfolgt die Übertragung eines Biegemoments von einem Verbindungselement auf das andere Verbindungselement an den eng tolerierten Kontaktflächen, die durch den hinteren Bereich des Dorns und der Ausnehmung einerseits sowie durch den vorderen Bereich des Dorns und dem in die Ausnehmung eingesetzten Ring andererseits gebildet sind, und zwar durch Flächenpressung der sich über den Umfang verteilenden Druckkräfte aus dem entstehenden Kräftepaar.

Aus der DE 44 30 069 A1 ist ein Verfahren für die Herstellung eines Baugerüstrohres bekannt geworden, welches an einem Ende mit einem kalt angeformten, im Durchmesser reduzierten Einsteckzapfen und welches im Übergangsbereich zwischen dem Rohr und dem Zapfen eine im wesentlichen senkrecht zur Rohrachse verlaufende, ringförmige Aufstandsfläche zum Abstützen eines auf den Zapfen aufgesteckten Rohrs aufweist, bei welchem das Rohr zunächst zur Bildung des Zapfens über die Länge des Zapfens im Durchmesser reduziert wird und anschließend zur Bildung der Aufstandsfläche der Übergangsbereich in axialer Richtung des Rohrs gestaucht wird. Um mit einfachen und verschleißfesten Ziehwerkzeugen ohne Ziehöl arbeiten zu können, wird die Durchmesserreduzierung im Bereich des Zapfens mit einem Vielbackenwerkzeug vorgenommen, das mehrere radial zustellbare Pressbacken hat und die Stauchung des Übergangsbereichs erfolgt mit einem ringförmigen, axial über den Zapfen schiebbaren Pressstempel und unter axialer Abstützung des Übergangsbereiches in einer ringförmigen Stützform, deren Innendurchmesser annähernd dem Außendurchmesser des Rohres entspricht. Dabei erhält man ein Gerüstrohr, bei dem an einem Rohr mit ursprünglichem Außendurchmesser ein einen reduzierten Außendurchmesser aufweisender Rohrverbinder einteilig an das Rohr angeformt ist. Bei der Anwendung dieses Verfahrens kommt es zwischen der Aufstandsfläche und dem Rohr zwingend zur Ausbildung eines vergleichweise großen Übergangsradius. Dadurch bedingt verringert sich die ringförmige Aufstandsfläche dementsprechend. Dem wird dort dadurch vorgebeugt, dass die Durchmesserreduzierung des Rohrverbinders vergleichsweise groß ist, so dass es zur Ausbildung eines Rohrverbinder-Außendurchmessers kommt der deutlich kleiner ist als der Innendurchmesser des Rohrs. Dadurch wiederum kommt es dann, wenn zwei derart hergestellte Gerüstrohre zusammengesteckt sind, zur Ausbildung eines dementsprechend großen radialen Spalts bzw. Spiels zwischen dem Rohrverbinder des ersten Gerüstrohrs und dem darauf aufgesteckten Rohr des zweiten Gerüstrohrs. Dadurch ergeben sich vergleichsweise große Kippwinkel und eine geringe Tragfähigkeit.

Aus der DE 35 46 045 A1 ist es bekannt geworden, einen separaten Rohrverbinder mit einem von vorne herein reduzierten Außendurchmesser in das obere Rohrende eines Gerüstrohrs einzupressen. In diesem Fall bildet dieses Rohrende eine ringförmige Aufstandsfläche zum Abstützen eines auf den Rohrverbinder aufgesteckten Rohres.

Auch in der DE 26 54 439 A (Figur 1) ist ein Rohrverbinder als separater Rohrteil mit einem von vorne herein reduzierten Außendurchmesser an einem Rohrende eines Rohrs eingepresst. Dies derart, dass in dem Aufsteck-Bereich, in welchem der in das Rohr eingesteckte Rohrverbinder das Rohrende überlappt, über den Rohrumfang gleichmäßig verteilt lokale Einkerbungen vorgesehen sind, die zu einem geringen Formschluss mit der Außenwand des Rohrverbinders führt. Eine ähnliche Befestigung eines separaten Rohrverbinderrohrs mit einem Rohr ist auch bei den aus der Praxis allgemein bekannten Gerüststielen des LAYHER Allround-Gerüstsystems vorgesehen, wobei lokale Einpressungen an dem Rohrende derart vorgenommen sind, dass die Wand des dort eingesteckten Rohrverbinders deutlich stärker verformt ist, und zwar unter Ausbildung einer lokalen Innenquerschnitts-verjüngung des Rohrverbinders. Dadurch wird ein deutlich verbesserter Formschluss und eine dementsprechend bessere Verbindungsfestigkeit zwischen dem Rohr und dem Rohrverbinder erreicht.

Im zusammengesteckten Zustand derartiger Gerüststiele mit eingepressten Rohrverbindern ist zwischen dem Rohrverbinder des einen Gerüststiels und dem Rohrendabschnitt des aufgesteckten anderen Gerüststiels ein vergleichsweise großer radialer Spalt bzw. ein vergleichsweise großes radiales Spiel vorhanden, so dass es dort zu einem dementsprechend großen radialen bzw. seitlichen Versatz der aufeinander gesteckten Gerüststiele kommt. Abgesehen davon, dass dieser Versatz eine reduzierte Aufstandsfläche bedeutet, womit eine dementsprechend reduzierte Kraftübertragung und Tragfähigkeit einhergeht, kann es bei diesen Gerüststielen unter Biegebeanspruchungen zu entsprechend vergrößerten Drehmomenten und Verkantungen an den Verbindungsstellen kommen und infolgedessen zu einer vergleichsweise raschen Abnutzung der aufeinander reibenden Verbindungsteile. Außerdem müssen bei diesen Gerüststielen aus den vorstehenden Gründen die eingepressten Rohrverbinder eine vergleichweise große Rohrverbinderlänge aufweisen, mit welcher sie über das Rohr nach außen vorstehen, um den Kippwinkel zu begrenzen und um die geforderten Tragfähigkeiten zu erreichen. Dadurch und bedingt durch den in das Rohr eingesteckten Abschnitt des Rohrverbinders, weist dieser bzw. weisen die mit einem derartigen Rohrverbinder versehenen Gerüststiele ein entsprechend großes Gewicht auf. Um bei den Werkstofffestigkeiten der bislang verfügbaren Stahlrohre die geforderten statischen Kennwerte erreichen zu können, müssen diese Gerüststiele mit einer vergleichweise großen Wanddicke von etwa 3,2 mm bis 4,1 mm ausgeführt sein. Dies führt zusätzlich zu einem dementsprechend deutlich erhöhten Materialaufwand und Gewicht sowie zu dementsprechend erhöhten Kosten derartiger Gerüststiele.

Es ist außerdem allgemein bekannt geworden, einen Rohrver-binder mit einem von vorne herein reduzierten Außendurchmesser als separates Bauteil in das Rohrende eines Gerüstrohrs eines Vertikalrahmens einzustecken und dort mittels Schrauben festzulegen. Diese Art der Anbindung und Befestigung des Rohrverbinders genügt unter anderem den statischen Anforderungen häufig nicht und der Montageaufwand ist groß.

Beispielsweise aus der DE 26 54 439 A ist außerdem bekannt geworden, im Durchmesser reduzierte Rohrverbinder dadurch herzustellen, dass zunächst das Rohrende über die Länge des Rohrverbinders durch Kaltumformen im Durchmesser reduziert wird und dass anschließend zur Bildung der Aufstandsfläche der Übergangsbereich zwischen dem Rohrverbinder und dem Rohr in axialer Richtung des Rohres gestaucht wird. Dabei bildet sich eine nach außen gewölbte Fläche in Form eines nach außen gestülpten, das Rohr radial überragenden Ringwulstes, der dann die Aufstandsfläche bildet und dessen Außendurchmesser demgemäß größer ist als der Außendurchmesser des Rohres. Gerüstrohre mit einem derartigen Wulst sind auch bereits in den eingangs erwähnten Druckschriften der Anmelderin beschrieben und sind beispielweise auch schon aus der DE 1 972 690 U, der DE 20 2006 015 586 U1 und den parallelen Schutzrechtsanmeldungen, beispielsweise der WO 2008/043339 A1 und der US 2010 0078 263 A1 sowie aus der äquivalenten EP 1 911 907 A1 der Anmelderin bekannt geworden.

Obgleich sich derartige, mit einem Wulst am Übergang vom Rohr zum Rohrverbinder ausgebildeten Gerüstrohre seit Jahrzehnten in der Praxis bestens bewährt haben und obwohl diese im Vergleich zu Gerüstrohren mit eingesteckten und durch Einpressen oder Schrauben festgelegten Rohrverbindern ein geringeres Gewicht aufweisen, sind diese nicht frei von Nachteilen. So kann ein derartiger Wulst beispielsweise die Montage von Bordbrettern erschweren oder deren Montage nur nach einer Deformation des Wulstes ermöglichen, die angebracht werden müssen, um ein seitliches Herunterfallen von Gegenständen von an dem Gerüstrohr abgestützten Gerüstböden zu verhindern. Ferner kann ein derartiger Wulst das Anschweißen von Beschlagteilen im Übergangsbereich zwischen der angeformten Aufstandsfläche und dem Rohr behindern und kann auch die Stapelbarkeit der Gerüstrohre bzw. von damit versehenen Gerüstrahmen beeinträchtigen. Außerdem ist bei dem Vorhandensein eines derartigen Wulstes das Aufschieben von umlaufenden Anschlusselementen, wie Rosetten oder Lochscheiben, auf das Gerüstrohr zum Zwecke deren Befestigung an dem Gerüstrohr nur von dem von dem freien Rohrende des Rohrs her und auch nur bis zu dem Wulst möglich. Dies kann mit Nachteilen bei der Montage und bei der Herstellung von mit derartigen Anschlusselementen zu versehenen Gerüstrohren verbunden sein. Schließlich sind bedingt durch die Form und Gestaltung des angestauchten Wulstes die damit gebildeten Gerüstrohre im Übergangsbereich zu deren Rohrverbinder weniger steif als die Gerüstrohre mit eingepressten Rohrverbindern.

Neben derartigen Gerüststielen, die mit einem am Übergang zwischen dem Rohr und dem Rohverbinder radial vorstehenden Wulst versehenen sind, ist beispielsweise aus der FR 2 529 931 A eine Ausführungsvariante bekannt geworden, bei der ein separater Rohrverbinder in das Rohrende eines Rohrs eingesteckt und dort durch Schweißen oder durch andere nicht näher bezeichnete Mittel befestigt ist. Aus dieser Druckschrift geht auch noch eine weitere Ausführungsvariante hervor, bei welcher der Rohrverbinder an dem Rohr angeformt ist, allerdings unter Ausbildung einer schrägen Aufstellfläche für einen aufsteckbaren Gerüststiel sowie unter Ausbildung eines vergleichsweise großen Radius am Übergang vom Rohr zu der Aufstellfläche. Dadurch lässt sich nur eine begrenzte Tragfähigkeit erreichen und es besteht die Gefahr von Verkantungen und/oder Beschädigungen des aufgesteckten Gerüststiels.

Aus der DE 202 00 728 U1 ist ein Gerüst-Rohrverbinder sowie Gerüst bekannt geworden. Ein Rohr ist an seinem oberen Rohrende durch Pressen und Prägen zu einem Steckelement verjüngt, bei dem es sich um einen Rohrverbinder handelt. Dessen Außendurchmesser entspricht dem Innendurchmesser des Rohrs. An dem Übergang zwischen dem einen Nennaußendurchmesser aufweisenden Rohr und dem Rohrverbinder ist eine Aufweitung mit einer konischen Schrägfläche gebildet. Diese erstreckt sich in einem Winkel zu der Längsachse des Rohrs, der 35 Grad oder 45 Grad beträgt. Durch die konische Schrägfläche wird das untere Ende des nächsten aufgesteckten Rohrs zusätzlich zentriert. An dem Übergang von dem Rohr zu der konischen Schrägfläche entsteht keine oder höchstens eine vernachlässigbare Kerbwirkung, weil der Übergang nicht scharfkantig, sondern sanft ist. Dementsprechend ist der besagte Übergang mit einem vergleichsweise großen Übergangsradius versehen. Der Rohrverbinder weist, in Richtung seines Einsteckendes betrachtet, unmittelbar an den mit der konischen Schrägfläche gebildeten Übergang anschließend eine im Wesentlichen kreiszylindrische, sich in Längsrichtung über eine erste Länge erstreckenden, ersten Rohrabschnitt auf. Ferner weist der Rohrverbinder im Bereich seines Einsteckendes einen im Wesentlichen kreiszylindrischen zweiten Rohrabschnitt auf, der sich in Längsrichtung über eine zweite Länge erstreckt. Dieser endseitige zweite Rohrabschnitt des Rohrverbinders weist den gleichen Außendurchmesser auf wie der übergangsnahe erste Rohrabschnitt des Rohrverbinders. Zwischen dem ersten Rohrabschnitt und dem zweiten Rohrabschnitt ist ein mittlerer Bereich des Rohrverbinders vorgesehen, der etwas weiter zurück springt bzw. der zusätzlich verjüngt ist und der sich über die Hälfte der Länge des Rohrverbinders erstreckt. Dadurch soll sowohl in dem Endbereich als auch in dem übergangsnahen Bereich des Rohrverbinders eine besonders gute Führung entstehen. Bedingt durch die konische Schrägfläche kommt es beim Aufeinanderstecken entsprechend gestalteter Gerüstrohre im Aufstandsbereich zur Ausbildung ganz erheblicher Spannungsspitzen mit der Folge von dementsprechend geringen statischen Kennwerten.

Obwohl Gerüststiele, die zum Aufbau von Gerüsten zusämmensteckbar sind, seit vielen Jahrzehnten in einer überaus großen Vielzahl unterschiedlichstet Ausgestaltungen und Anwendungen bekannt geworden sind, hat es sich in aufwendigen Praxisversuchen gezeigt, dass durch bestimmte Detailverbesserungen gegenüber den bisherigen Gerüststielen überraschenderweise ganz erhebliche technische und wirtschaftliche Vorteile erzielbar sind.

Es ist eine Aufgabe der Erfindung, einen Gerüststiel zur Verfügung zu stellen, der bei vergleichsweise geringem Gewicht und bei vorteilhaften Herstellung-, Transport- und Lagermöglichkeiten, vorteilhaften Montage- und Befestigungsmöglichkeiten für daran zu befestigende Anschluss- und/oder Befestigungs- und/oder Tragelemente sowie bei vorteilhaften Kombinationsmöglichkeiten mit bisherigen Gerüststielen, auch solchen mit einer größeren Rohrwanddicke, bessere statische Kennwerte aufweist.

Diese Aufgabe wird durch die Merkmale des Anspruches 1 gelöst. Demgemäß kann bei einem Gerüststiel mit den eingangs erwähnten Merkmalen vorgesehen sein, dass der Rohrverbinder im Bereich bzw. benachbart zu der Stiel-Aufstell-Stirnfläche einen einen ersten Rohrverbinder-Außendurchmesser aufspannenden Zentrierbereich zur Zentrierung des auf den Rohrverbinder aufsteckbaren bzw. aufgesteckten Rohrs des weiteren Gerüststiels aufweist und dass der Rohrverbinder ferner einen sich an den Zentrierbereich in Richtung des freien Rohrverbinderendes, vorzugsweise unmittelbar, anschließenden, innerhalb des Rohrverbinder-Abschnitts angeordneten, die Stützflächen enthaltenden und einen zweiten Rohrverbinder-Außendurchmesser aufspannenden Stützbereich zur seitlichen Abstützung des auf den Rohrverbinder aufsteckbaren bzw. aufgesteckten Rohrs des weiteren Gerüststiels aufweist, und dass der erste Rohrverbinder-Außendurchmesser geringfügig größer ist als der zweite Rohrverbinder-Außendurchmesser,
und
dass das Rohr im Bereich seines ersten Rohrendes einen im wesentlichen kreiszylindrischen Rohrabschnitt aufweist, der einen Rohraußendurchmesser aufweist, der im wesentlichen dem von dem Rohrendabschnitt aufgespannten maximalen Rohraußendurchmesser entspricht bzw. der dem Rohraußendurchmesser des ursprünglichen Rundrohrs entspricht und der in Richtung des freien Rohrverbinderendes unmittelbar,
entweder
mit einem geringen Übergangsradius gerundet, in die senkrecht zu der Längsachse des Gerüststiels verlaufende Stiel-Aufstell-Stützfläche übergeht, wobei der Übergangsbereich zwischen der Stiel-Aufstell-Stirnfläche und dem sich daran in Richtung des freien Rohrendes anschließenden zylindrischen Rohrabschnitt mit dem Übergangsradius gestaltet ist, der gleich oder kleiner 1,5 mm ist,
oder im wesentlichen scharfkantig über eine ringförmige Kante in die senkrecht zu der Längsachse des Gerüststiels verlaufende Stiel-Aufstell-Stirnfläche übergeht,
und
dass unmittelbar an die senkrecht zu der Längsachse des Gerüststiels verlaufende Stiel-Aufstell-Stirnfläche in Richtung des freien Rohrverbinderendes anschließend zwischen der Stiel-Aufstell-Stirnfläche und dem Zentrierbereich des Rohrverbinders eine um die Längsachse umlaufende, ringförmige Einschnürung in Form einer Eindrückung ausgebildet ist, wobei die Einschnürung einen minimalen Außendurchmesser aufspannt, der geringfügig kleiner ist als der erste Rohrverbinder-Außendurchmesser in dem Zentrierbereich des Rohrverbinders, und wobei sich der Zentrierbereich des Rohrverbinders in Richtung des freien Rohrverbinderendes unmittelbar an die ringförmige Einschnürung anschließt.

Eine derartige Eindrückung kann bevorzugt in einer Kaltverformung hergestellt sein. Durch eine derartige Einschnürung kann die Stiel-Aufstell-Stirnfläche noch weiter maximiert werden, so dass die auftretenden Kräfte noch besser auf einen unteren Gerüststiel übertragbar sind. Außerdem kann durch eine derartige Einschnürung ein gegenseitiges Verklemmen von aufeinander gesteckten Gerüststielen bedingt durch an den wirksamen Verbindungsflächen anhaftende Schmutzpartikel vermieden werden, so dass stets eine einwandfreie Lösbarkeit von aufeinander gesteckten Gerüststielen gewährleistet ist.

Dadurch, dass die Einschnürung einen minimalen Außendurchmesser aufspannt, der nur geringfügig kleiner ist als der erste Rohrverbinder-Außendurchmesser im Zentrierbereich des Rohrverbinders, wird unter Beibehalt der vorstehenden Vorteile in diesem Übergangsbereich im Vergleich zu einem Übergang ohne eine derartige Einschnürung eine dennoch hohe Festigkeit in diesem Übergangsbereich sichergestellt.

Dadurch, dass sich der Zentrierbereich des Rohrverbinders in Richtung des freien Rohrverbinderendes unmittelbar an die ringförmige Einschnürung anschließt, kann eine ausreichend große Führungslänge zwischen dem Zentrierbereich und dem wirksamen Stützbereich entsprechend der wirksamen Rohrverbinderlänge erreicht werden.

Wenn der besagte Rohrabschnitt bzw. dessen Rohraußendurchmesser in Richtung des freien Rohrverbinderendes unmittelbar, entweder im wesentlichen scharfkantig über eine ringförmige Kante, oder mit einem geringen Übergangsradius von gleich oder kleiner 1,5 mm gerundet, in die Stiel-Aufstell-Stirnfläche übergeht, geht in beiden Fällen die Stiel-Aufstell-Stirnfläche im wesentlichen wulstfrei bzw. im wesentlichen ohne einen radial über den Rohraußendurchmesser des sich an die Stiel-Aufstell-Stirnfläche in Richtung des freien Rohrendes anschließenden Rohrabschnitts des Rohrs überstehenden Wulst und vergleichsweise scharfkantig bzw. mit einem geringen Radius in diesen Rohrabschnitt über. Umgekehrt betrachtet, geht also der besagte Rohrabschnitt im wesentlichen wulstfrei bzw. im wesentlichen ohne einen radial über seinen Rohraußendurchmesser überstehenden Wulst und vergleichsweise scharfkantig bzw. mit einem geringen Radius in die Stiel-Aufstell-Stirnfläche über.

Dadurch, dass der Rohrverbinder im Bereich bzw. benachbart zu der Stiel-Aufstell-Stirnfläche einen einen ersten Rohrverbinder-Außendurchmesser aufspannenden Zentrierbereich zur Zentrierung des auf den Rohrverbinder aufsteckbaren bzw. aufgesteckten Rohrs des weiteren Gerüststiels aufweist, und dass der Rohrverbinder ferner einen sich an den Zentrierbereich in Richtung des freien Rohrverbinderendes, vorzugsweise unmittelbar, anschließenden, innerhalb des Rohrverbinder-Abschnitts angeordneten, die Stützflächen enthaltenden und einen zweiten Rohrverbinder-Außendurchmesser aufspannenden Stützbereich zur seitlichen Abstützung des auf den Rohrverbinder aufsteckbaren bzw. aufgesteckten Rohrs des weiteren Gerüststiels aufweist, und dass der erste Rohrverbinder-Außendurchmesser geringfügig größer ist als der zweite Rohrverbinder-Außendurchmesser, werden ganz besonders vorteilhafte Zentriermöglichkeiten einerseits und vorteilhafte Stützmöglichkeiten andererseits, sowie in Kombination dementsprechend weiter verbesserte statische Kennwerte erreicht. Dies auch und gerade in einem Aufstellzustand, in welchem der erfindungsgemäße Gerüststiel mit einem weiteren erfindungsgemäßen oder auch gleichartigen bzw. herkömmlichen Gerüststiel zusammen gesteckt ist, insbesondere bedingt durch eine bessere Ausnutzung der Stiel-Aufstell-Stirnfläche, wodurch die auftretenden Kräfte besser auf den unteren Gerüststiel übertragen werden.

Dadurch, dass bzw. dann, wenn das Rohr im Bereich seines ersten Rohrendes einen im wesentlichen kreiszylindrischen Rohrabschnitt aufweist, der einen Rohraußendurchmesser aufweist, der im wesentlichen dem von dem Rohrendabschnitt aufgespannten maximalen Rohraußendurchmesser entspricht bzw. der dem Rohraußendurchmesser des ursprünglichen Rundrohrs entspricht und der in Richtung des freien Rohrverbinderendes betrachtet unmittelbar, entweder im wesentlichen bzw. vergleichweise scharfkantig über eine ringförmige Kante, oder mit einem geringen Übergangsradius von gleich oder kleiner 1,5 mm gerundet, in die Stiel-Aufstell-Stützfläche übergeht, wird insbesondere eine Maximierung der Stiel-Aufstell-Stirnfläche erreicht, so dass dementsprechend verbesserte statische Kennwerte erzielbar sind. Ferner lässt sich durch diese Maßnahmen ein seitlich bzw. radial vorstehender Wulst komplett vermeiden, wodurch sich eine ganze Reihe weiterer Vorteile ergeben. Beispielsweise ist die Montage von Bordbrettern erleichtert bzw. nicht behindert, ohne dass Verformungen von Wandteilen des Gerüststiels notwendig sind. Ferner ist durch die vorstehenden Maßnahmen das Anschweißen von Beschlagteilen im Übergangsbereich zwischen der angeformten Aufstandsfläche und dem Rohr behinderungsfrei möglich. Außerdem sind aufgrund dieser Maßnahmen die erfindungsgemäßen Gerüststiele, sei es einzeln oder verbaut in anderen Gerüstbauteilen, beispielsweise in einem Gerüstrahmen, besonders platzsparend und behinderungsfrei lager- und transportierbar. Außerdem ist nunmehr ein Aufschieben von umlaufenden Anschlusselementen, wie Rosetten oder Lochscheiben, auf den Gerüststiel von beiden Enden her behinderungsfrei möglich, wodurch eine einfachere und wirtschaftlichere Montage derartiger Anschlusselemente, beispielsweise auch dadurch möglich ist, dass zwei noch nicht mit derartigen Anschlusselementen versehene Gerüststiele zusammen gesteckt werden und erst dann von einer beliebigen Seite her die Anschlusselemente auf die zusammengesteckten Gerüststiele in Längsrichtung auf diese aufgeschoben werden, wobei oder wonach die Anschlusselemente an vorbestimmten Befestigungspositionen positioniert und dann dort an den Gerüststielen befestigt, vorzugsweise angeschweißt, werden. Schließlich erhält man durch die besagten Maßnahmen einen Gerüststiel, der im Übergangsbereich zwischen Rohrverbinder und Rohr deutlich steifer ist, als die herkömmlichen Gerüststiele, die im Übergangsbereich mit seitlich vorstehenden Wulsten hergestellt bzw. versehen sind.

Gemäß einem bevorzugten Ausführungsbeispiel kann vorgesehen sein, dass die Eindrückungen jeweils L-förmig oder T-förmig bzw. als L-Eindrückungen oder als T-Eindrückungen, mit einer Längs-Stützeindrückung zur seitlichen Abstützung an dem bzw. des in das Rohr einsteckbaren bzw. eingesteckten Rohrverbinder bzw. Rohrverbinders des weiteren Gerüststiels und mit einer Quer-Zentriereindrückung zur Zentrierung gegenüber dem in das Rohr einsteckbaren bzw. eingesteckten Rohrverbinder des weiteren Gerüststiels gestaltet sind, und wobei die Längs-Stützeindrückung und die Quer-Zentriereindrückung jeweils mit einer Rohrinnenquerschnitts-Verjüngung ausgebildet sind, und dass sich die Quer-Zentriereindrückung in Umfangsrichtung um die Längsachse des Gerüststiels quer, vorzugsweise senkrecht, zu der Längs-Stützeindrückung, diese in Umfangsrichtung seitlich überragend, durchgehend erstreckt, und dass die Quer-Zentriereindrückung, vorzugsweise nur, an dem freien Rohrende angeordnet und dort von einer Ring-Abschnitts-Fläche bzw. Ring-Teil-Fläche der Rohr-Stütz-Stirnfläche begrenzt ist.

Wenn die Eindrückungen jeweils T-förmig oder L-förmig mit einer Längs-Stützeindrückung zur seitlichen Abstützung des in das Rohr einsteckbaren bzw. eingesteckten Rohrverbinders des weiteren Gerüststiels und mit einer Quer-Zentriereindrückung zur Zentrierung des in das Rohr einsteckbaren bzw. eingesteckten Rohrverbinders des weiteren Gerüststiels gestaltet sind, wobei die Längs-Stützeindrückung und die Quer-Zentriereindrückung jeweils mit einer Rohrinnenquerschnitts-Verjüngung ausgebildet sind, und wobei sich die Quer-Zentriereindrückung in Umfangsrichtung um die Längsachse des Gerüststiels quer, vorzugsweise senkrecht, zu der Längs-Stützeindrückung, diese in Umfangsrichtung seitlich überragend, durchgehend erstreckt, und wobei die Quer-Zentriereindrückung, vorzugsweise nur, an dem freien Rohrende angeordnet und dort von einer Ring-Abschnitts-Fläche der Rohr-Stütz-Stirnfläche begrenzt ist, ergeben sich besonders vorteilhafte Zentriermöglichkeiten bzw. ergibt sich eine besonders vorteilhafte Zentrierung des auf den Rohrverbinder eines weiteren, insbesondere gleichen oder gleichartigen oder herkömmlichen, Gerüststiels aufgesteckten Rohrs gegenüber diesem weiteren Gerüststiel, bei dementsprechend besseren statischen Kennwerten des erfindungsgemäßen Gerüststiels bzw. in einem mit einem weiteren Gerüststiel zusammen gesteckten Zustand und ferner, bei noch immer günstigen Befestigungsmöglichkeiten von Anschluss-, Befestigungs- oder Kupplungselementen im Bereich des freien Rohrendes unmittelbar benachbart zu der Rohr-Stütz-Stirnfläche des Rohrs des erfindungsgemäßen Gerüstrohrs, und schließlich, bei vorteilhaften Möglichkeiten für eine Reduktion der Rohrwanddicke des erfindungsgemäßen Gerüststiels, unter Beibehalt eines Rohrverbinders mit einem gegenüber Rohrverbindern gleichartiger bzw. herkömmlicher Gerüststiele unveränderten Rohrverbinder-Außendurchmesser, so dass diesbezüglich weiterhin gute Kombinationsmöglichkeiten vorhanden sind.

Ganz besonders gute Zentriermöglichkeiten und dementsprechend gute statische Kennwerte lassen sich gemäß einem bevorzugten Ausführungsbeispiel dadurch erreichen, dass sich die Quer-Zentriereindrückung bzw. die zugehörige Rohrinnenquerschnitts-Verjüngung ausgehend von der Rohr-Stütz-Stirnfläche in Richtung des Rohrverbinders über eine Länge erstreckt, die einem Abstand zumindest eines Teils des Zentrierbereichs des Rohrverbinders von der Stiel-Aufstell-Stirnfläche entspricht.

Eine weitere Verbesserung im Sinne der vorstehenden Vorteile lässt sich in einer Ausgestaltung dadurch erreichen, dass die Länge der Quer-Zentriereindrückung bzw. der zugehörigen Rohrinnenquerschnitts-Verjüngung etwa ein Zehntel bis die Hälfte des maximalen Rohr-Außendurchmessers im Rohr-Aufsteckbereich und/oder etwa 5 mm bis 20 mm oder etwa ein Sechstel bis ein Viertel des maximalen Rohr-Außendurchmessers im Rohr-Aufsteckbereich und/oder etwa 8 mm bis 12 mm oder etwa 21 Prozent des maximalen Rohr-Außendurchmessers im Rohr-Aufsteckbereich und/oder etwa 10 mm beträgt.

Eine abermals weitere Verbesserung im Sinne der vorstehenden Vorteile lässt sich gemäß einem besonders bevorzugten Ausführungsbeispiel dadurch erreichen, dass sich die Quer-Zentriereindrückung bzw. die zugehörige Rohrinnenquerschnitts-Verjüngung in Umfangsrichtung um die Längsachse über einen ersten Umfangswinkel erstreckt, der größer ist als der Quotient aus 360 Grad und dem Doppelten der Anzahl der L- bzw. T-förmigen Eindrückungen und der kleiner ist als der Quotient aus 360 Grad und dem Einfachen der Anzahl der L- bzw. T-förmigen Eindrückungen und dass sich die Längs-Stützeindrückung bzw. die zugehörige Rohrinnenquerschnitts-Verjüngung in Umfangsrichtung um die Längsachse über einen kleineren zweiten Umfangswinkel erstreckt, der etwa halb so groß oder weniger als halb so groß ist als der erste Umfangswinkel oder der etwa dem Quotient aus 360 Grad und dem dreifachen der Anzahl der L- bzw. T-förmigen Eindrückungen entspricht.

Durch die vorstehenden Maßnahmen lassen sich die L- bzw. T-förmigen Eindrückungen einfach und mit vergleichsweise geringen Umformkräften, insbesondere in einem Kaltumformungsvorgang, herstellen. Dabei sind die jeweilige Längs-Stützeindrückung und die jeweilige Quer-Zentriereindrückung in einem einzigen Bearbeitungsschritt herstellbar. Auch können alle derartigen L- bzw. T-förmigen Eindrückungen über den Umfang versetzt in einem einzigen Bearbeitungsschritt hergestellt werden.

Die vorstehenden Vorteile lassen sich gemäß einem weiteren Ausführungsbeispiel weiter verbessern, wenn die Quer-Zentriereindrückung bzw. die zugehörige Rohrinnenquerschnitts-Verjüngung mit teilzylindrischen, insbesondere mit teilkreiszylindrischen, Innen-Zentrierflächen begrenzt ist und/ oder wenn die Längs-Stützeindrückung bzw. die zugehörige Rohrinnenquerschnitts-Verjüngung mit teilzylindrischen, insbesondere mit teilkreiszylindrischen, Innen-Stützflächen begrenzt ist.

Eine weitere Verbesserung im Sinne der vorstehenden Vorteile kann gemäß einem weiteren Ausführungsbeispiel dadurch erreicht werden, dass sich die Quer-Zentriereindrückung bzw. die zugehörige Rohrinnenquerschnitts-Verjüngung im wesentlichen in dem gesamten Umfangsbereich, in welchem sie in Umfangsrichtung seitlich über die zugehörige Längs-Stützeindrückung hinausragt, in Längsrichtung betrachtet eine im wesentlichen konstante Länge aufweist und/oder dass die Längs-Stützeindrückung bzw. die zugehörige Rohrinnenquerschnitts-Verjüngung im wesentlichen über ihre gesamte Länge, in Umfangsrichtung betrachtet, eine im wesentlichen konstante Breite aufweist.

Eine abermalige Verbesserung in Sinne der vorstehenden Vorteile lässt sich in weiterer Ausgestaltung erreichen, wenn die T-förmigen Eindrückungen jeweils symmetrisch zur Längsachse ihrer Längs-Stützeindrückung ausgebildet sind.

Eine weitere Verbesserung im Sinne der vorstehenden Vorteile lässt sich gemäß einer besonders vorteilhaften Ausführungsvariante dadurch erreichen, dass der Zentrierbereich des Rohrverbinders als ein im wesentlichen zylindrischer, insbesondere als ein im wesentlichen kreiszylindrischer, sich in Längsrichtung über eine Zentrierlänge erstreckender Zentrierabschnitt ausgebildet ist und/oder dass der Stützbereich des Rohrverbinders als ein im wesentlichen zylindrischer, insbesondere als ein im wesentlichen kreiszylindrischer, sich in Längsrichtung über eine Stützlänge erstreckender Stützabschnitt ausgebildet ist.

Von weiterem Vorteil ist es dabei, wenn gemäß einer oder mehrerer weiterer Ausgestaltungen die Zentrierlänge sehr viel kleiner ist als die Stützlänge und/oder wenn die Zentrierlänge etwa ein Achtel bis die Hälfte des ersten Rohrverbinder-Außendurchmessers und/oder etwa 5 mm bis 20 mm oder etwa ein Fünftel bis ein Viertel des ersten Rohrverbinder-Außendurchmessers und/oder 6 mm bis 10 mm oder etwa 21 Prozent des ersten Rohrverbinder-Außendurchmessers und/oder etwa 8 mm beträgt. Dies reicht für eine gute Zentrierung aus und zugleich wird dadurch eine leichte Zusammensteckbarkeit bzw. Lösbarkeit sichergestellt. Außerdem lässt sich ein derartiger Zentrierabschnitt besonders einfach herstellen.

Gemäß einer vorteilhaften weiteren Ausgestaltung kann die Stützlänge etwa das 3,5 bis 4,5-fache des zweiten Rohrverbinder-Außendurchmessers und/oder etwa 130 mm bis 170 mm oder etwa das 4-fache des zweiten Rohrverbinder-Außendurchmessers und/oder etwa 150 mm betragen. Dadurch können die Anforderungen, die an zusammengesteckte Gerüststiele im Gerüstbau hinsichtlich deren Statik und deren Sicherheit in besonderem Maße erfüllt werden.

Die Anforderungen an eine leichte Zusammensteckbarkeit und Wiederlösbarkeit mehrerer Gerüststiele und deren Kombinierbarkeit bzw. Vermischbarkeit sowie die Anforderungen an die Statik derartiger Gerüststiele können gemäß einem weiteren Ausführungsbeispiel in ganz besonderem Maße erfüllt werden, wenn der erste Rohrverbinder-Außendurchmesser um etwa 1 bis 4 Prozent oder um etwa 2 bis 3 Prozent oder um etwa 2,1 Prozent größer ist als der zweite Rohrverbinder-Außendurchmesser und/oder wenn der erste Rohrverbinder-Außendurchmesser etwa 38,3 mm bis 39,5 mm oder etwa 38,8 mm beträgt und wenn der zweite Rohrverbinder-Außendurchmesser etwa 37,7 mm bis 38,2 mm oder etwa 38,0 mm beträgt.

Gemäß einer besonders vorteilhaften Weiterbildung kann vorgesehen sein, dass der Übergangsbereich zwischen der Stiel-Aufstell-Stirnfläche und dem sich daran in Richtung des freien Rohrendes anschließenden zylindrischen Rohrabschnitt mit einem Übergangsradius gestaltet ist, der gleich oder kleiner 1,0 mm ist. Dadurch lassen sich die vorstehenden Vorteile in besonderem Maße verwirklichen.

Gemäß einer Weiterbildung kann vorgesehen sein, dass die wirksame Rohrverbinderlänge etwa das 4,0- bis 4,5-fache des zweiten Rohrverbinder-Außendurchmessers und/oder etwa 155 mm bis 175 mm oder etwa das 4,3 bis 4,4-fache des zweiten Rohrverbinder-Außendurchmessers und/oder etwa 165 mm beträgt. Dadurch werden die an derartige Gerüststiele in einem zusammen- bzw. aufeinander gesteckten Zustand gestellten Anforderungen hinsichtlich der Statik und Sicherheit in besonderem Maße erfüllt.

Der erfindungsgemäße Gerüststiel lässt sich gemäß einer weiteren Ausgestaltung besonders einfach, kostengünstig und mit besonders vorteilhaften mechanischen bzw. statischen Kennwerten herstellen, wenn die L- bzw. T-förmigen Eindrückungen und/oder die Stiel-Aufstell-Stirnfläche und/oder im wesentlichen der gesamte Rohrverbinder, also einschließlich dessen Zentrierbereich und dessen Stützbereich, durch eine Kaltverformung hergestellt ist bzw. sind.

Gemäß einem besonders bevorzugten Ausführungsbeispiel der Erfindung kann vorgesehen sein, dass die Rohrwanddicke des Rohrs etwa 2,7 mm beträgt. Der Gerüststiel aus Stahl kann bevorzugt eine höhere Festigkeit als herkömmliche Gerüststiele der Qualität St37 aufweisen. Insbesondere dann, wenn der erfindungsgemäße Gerüststiel aus einem eine Rohrwanddicke von etwa 2,7 mm aufweisenden Rundrohr hergestellt ist bzw. wenn die Rohrwanddicke des Rohrs des erfindungsgemäßen Gerüststiels etwa 2,7 mm beträgt, erhält man Gerüststiele, die gegenüber den eine Wanddicke von 3,2 mm aufweisenden herkömmlichen Gerüststielen mit einer Länge von etwa zwei Metern, ein um etwa 2,0 kg reduziertes Gewicht aufweisen. Dadurch ergeben sich maßgebliche Vorteile bei der Handhabung und beim Aufbau von Gerüsten. Trotz der reduzierten Rohrwanddicke erfüllen diese Gerüststiele aufgrund ihrer deutlich erhöhten Festigkeit die Anforderungen an die Tragfähigkeit, Statik und Sicherheit voll bzw. übertreffen diese sogar noch.

Gemäß einer besonders vorteilhaften Ausgestaltung kann vorgesehen sein, dass der Rohrverbinder und das Rohr - mit Ausnahme von Übergangs- und/oder Endbereichen - über die gesamte Länge des Gerüststiels nach außen hin mit im wesentlichen kreiszylindermantelförmigen Außenflächen begrenzt sind. Die Außenflächen des Rohrs können bevorzugt den Außendurchmesser des ursprünglichen Rundrohrs aufspannen, also des noch nicht unter Ausbildung des Rohrverbinders und der Eindrückungen verformten Rundrohrs.

Gemäß einer Weiterbildung kann der erfindungsgemäße Gerüststiel entweder mit wenigstens einem weiteren erfindungsgemäßen Gerüststiel zusammengesteckt sein oder kann mit wenigstens einem gleichartigen bzw. herkömmlichen anderen Gerüststiel zusammengesteckt sein, der gegenüber dem erfindungsgemäßen Gerüststiel einen Rohrverbinder mit einem im wesentlichen gleichen Rohrverbinder-Außendurchmesser, vorzugsweise ein Rohr mit einem im wesentlichen gleichen oder größeren Rohraußendurchmesser, insbesondere mit einer im wesentlichen gleichen oder größeren Rohrwanddicke, aufweist, wobei sich das Rohr und der Rohrverbinder des anderen Gerüststiels jeweils in Richtung einer Längsachse dieses anderen Gerüststiels erstrecken und koaxial zu dieser Längsachse angeordnet sind, und wobei zwischen dem Rohrverbinder und dem einen demgegenüber größeren Außendurchmesser aufweisenden Rohr des anderen Gerüststiels ein Anschlag zum Aufstellen eines Gerüststiels ausgebildet ist. Auf diese Art und Weise können also entweder erfindungsgemäße Gerüststiele miteinander kombiniert werden oder kann wenigstens ein erfindungsgemäßer Gerüststiel mit einem gleichartigen und/oder herkömmlichen Gerüststiel kombiniert bzw. vermischt werden.

Gemäß einem ganz besonders bevorzugten Ausführungsbeispiel kann vorgesehen sein, dass entweder dann, wenn ein erster erfindungsgemäßer Gerüststiel und ein zweiter erfindungsgemäßer Gerüststiel auf Anschlag bzw. bis zu dem Anschlag einer dieser beiden Gerüststiele zusammen gesteckt sind, zwischen den inneren Zentrierflächen der Quer-Zentriereindrückungen bzw. den zugehörigen Rohrinnenquerschnitts-Verjüngungen des zweiten Gerüststiels und den korrespondierenden, unmittelbar gegenüber liegenden äußeren Zentrierflächen des Zentrierbereichs des Rohrverbinders des ersten Gerüststiels ein Zentrierspalt ausgebildet ist, und ferner zwischen den inneren Stützflächen der Längs-Stützeindrückungen bzw. den zugehörigen Rohrinnenquerschnitts-Verjüngungen des zweiten Gerüststiels und den korrespondierenden, unmittelbar gegenüber liegenden Stützflächen des Stützbereichs des Rohrverbinders des ersten Gerüststiels ein Stützspalt ausgebildet ist, der geringfügig größer ist als der Zentrierspalt oder dass dann, wenn ein erfindungsgemäßer bzw. der erfindungsgemäße Gerüststiel und der andere bzw. ein anderer Gerüststiel auf Anschlag bzw. bis zu dem Anschlag einer dieser beiden Gerüststiele zusammen gesteckt sind, zwischen den äußeren Zentrierflächen des Zentrierbereichs des Rohrverbinders des erfindungsgemäßen Gerüststiels und korrespondierenden, unmittelbar gegenüber liegenden, inneren Stütz- bzw. Zentrierflächen des Rohr-Aufsteckbereichs des anderen Gerüststiels ein Zentrierspalt ausgebildet ist, und ferner zwischen den Stützflächen des Stützbereichs des Rohrverbinders des erfindungsgemäßen Gerüststiels und korrespondierenden, unmittelbar gegenüber liegenden, inneren Stützflächen des Rohraufsteckbereichs des anderen Gerüststiels ein Stützspalt ausgebildet ist, der geringfügig größer ist als der Zentrierspalt. Dadurch kann eine besonders gute Zentrierung der aufeinander gesteckten Gerüststiele relativ zueinander, unter Maximierung der jeweils nutzbaren Aufstellfläche, in Verbindung mit einer dementsprechend verbesserten Übertragung der auftretenden Kräfte auf den jeweils unteren Gerüststiel erreicht werden. Ferner kann dadurch auch eine vorteilhafte seitliche bzw. radiale Abstützung der Gerüststiele relativ zueinander erreicht werden, so dass dementsprechend ein Verkippen bzw. eine Schrägstellung der Gerüststiele relativ zueinander minimiert wird. Zugleich kann dadurch noch immer sichergestellt werden, dass die Gerüststiele einfach und leicht zusammen gesteckt und auch wieder einfach und leicht gelöst werden können.

Eine weitere Verbesserung im Sinne der vorstehenden Vorteile kann gemäß einer bevorzugten Ausführungsvariante dadurch erreicht werden, dass der Zentrierspalt um etwa 15 bis 40 Prozent und/oder um etwa 0,6 mm bis 1,0 mm oder um etwa 25 bis 30 Prozent und/oder um etwa 0,8 mm kleiner ist als der Stützspalt.

Abermals eine Verbesserung im Sinne der vorstehenden Vorteile kann gemäß einer bevorzugten Weiterbildung dadurch erreicht werden, dass der Zentrierspalt zwischen etwa 4 und 9 Prozent des ersten Rohrverbinder-Außendurchmessers und/ oder zwischen etwa 1,7 mm und 3,3 mm oder zwischen etwa 5 und 8 Prozent des ersten Rohrverbinder-Außendurchmessers und/oder zwischen etwa 2,1 mm und 3,1 mm oder etwa 5,4 Prozent des ersten Rohrverbinder-Außendurchmessers und/oder etwa 2,1 mm beträgt und/oder dass der Stützspalt zwischen etwa 6 und 12 Prozent des zweiten Rohrverbinder-Außendurchmessers und/oder zwischen etwa 2,5 mm und 4,3 mm oder zwischen etwa 7, 5 und 10,5 Prozent des zweiten Rohrverbinder-Außendurchmessers und/oder zwischen etwa 2,9 mm und 3,9 mm oder etwa 7,6 Prozent des zweiten Rohrverbinder-Außendurchmessers und/ oder etwa 2,9 mm beträgt.

Der erfindungsgemäße Gerüststiel kann vorteilhaft einen Bestandteil eines Gerüstrahmens und/oder eines Gerüsts, insbesondere eines Modulgerüsts oder eines Rahmengerüsts, bilden. Demgemäß betrifft die Erfindung auch einen Gerüstrahmen mit wenigstens einem erfindungsgemäßen Gerüststiel, vorzugsweise mit mehreren derartigen Gerüststielen. Ferner betrifft die Erfindung auch ein Gerüst, insbesondere ein Systemgerüst, vorzugsweise ein Rahmengerüst oder ein Modulgerüst, mit wenigstens einem erfindungsgemäßen Gerüststiel, vorzugsweise mit mehreren derartigen Gerüststielen.

Es versteht sich, dass die vorstehenden Merkmale und Maßnahmen im Rahmen der Ausführbarkeit beliebig kombinierbar sind.

Weitere Merkmale, Vorteile und Gesichtspunkte der Erfindung lassen sich dem nachfolgenden Beschreibungsteil entnehmen, in dem vorteilhafte Ausführungsbeispiele der Erfindung anhand der Figuren beschrieben sind. Die der Beschreibung und den Zeichnungen entnehmbaren Merkmale können erfindungsgemäß einzeln oder in einer Mehrzahl beliebig kombiniert werden.

Es zeigen:

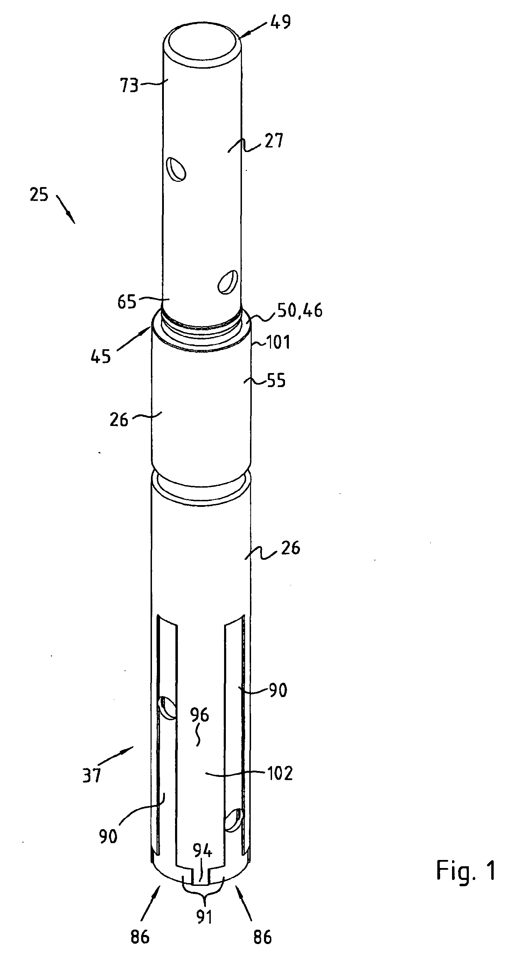

- Figur 1: Eine dreidimensionale Teilansicht eines erfindungsgemäßen Gerstüststiels, der aus Darstellungsgründen in der Länge gekürzt, mit zwei Stielteilen veranschaulicht ist, nämlich im Bereich des Rohrverbinders einerseits und im Bereich des Rohrendabschnitts andererseits;

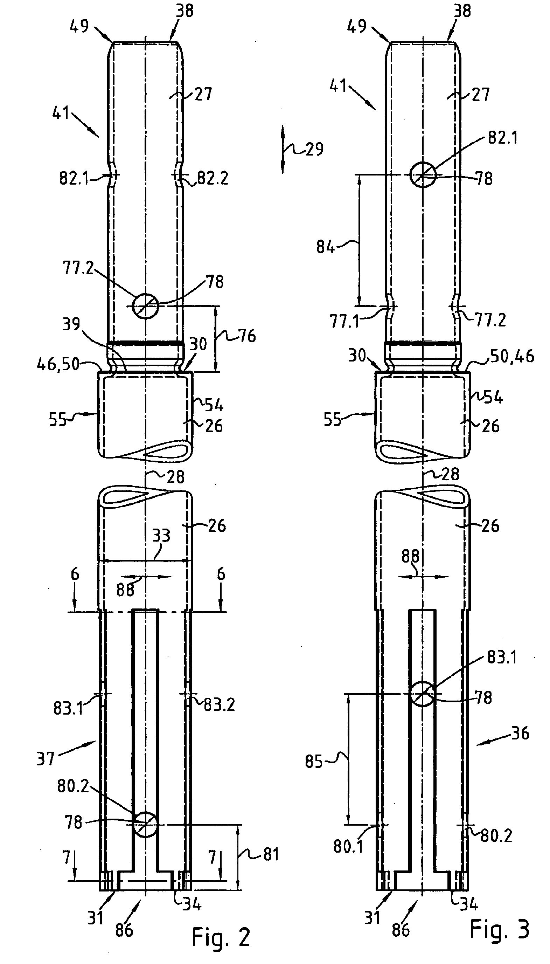

- Figur 2: Eine Draufsicht des Gerüststiels gemäß der Figur 1;
- Figur 3: Eine weitere Draufsicht des Gerüststiels in einer gegenüber der Figur 2 um 90 Grad um die Längsachse gedrehten Darstellung;

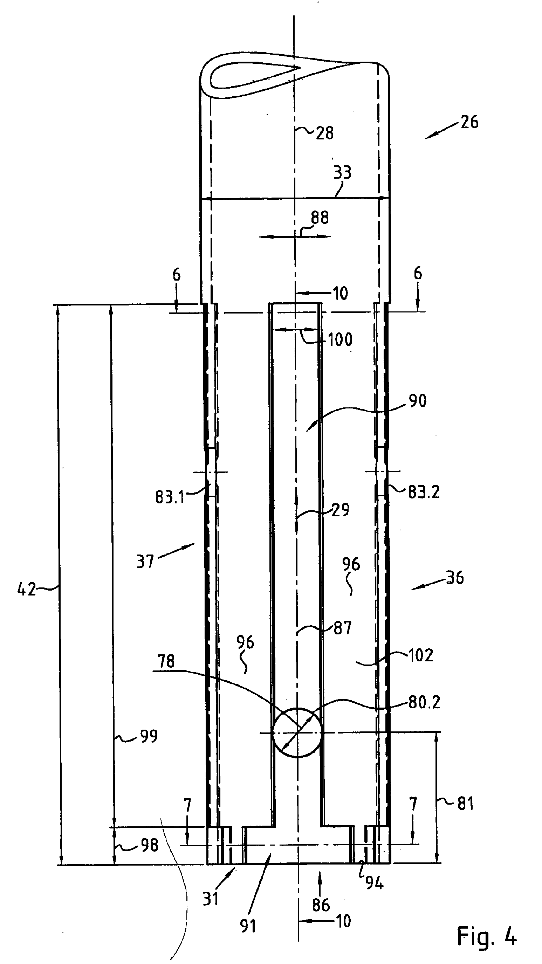

- Figur 4: eine vergrößerte Draufsicht des Gerüststiels gemäß der Figur 2 im Bereich des Rohrendabschnitts am freien Rohrende des Rohrs;

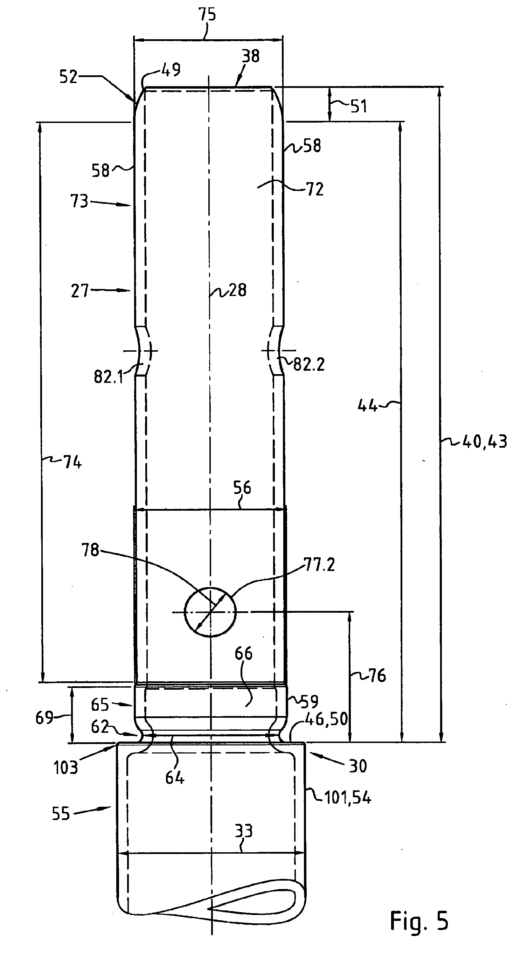

- Figur 5: Eine vergrößerte Draufsicht des Gerüststiels gemäß der Figur 2 im Bereich des Rohrverbinders;
- Figur 6: Einen vergrößerten Querschnitt des Gerüststiels in dem mit Längs-Stützeindrückungen von T-Eindrückungen versehenen Stützbereich am oberen Ende des Rohr-Aufsteckbereichs, entlang der Schnittlinien 6-6 in Figur 2 bzw. 4;
- Figur 7: Einen vergrößerten Querschnitt des Gerüststiels in dem mit Quer-Zentriereindrückungen versehenen Zentrierbereich am unteren Ende des Rohr-Aufsteckbereichs, entlang der Schnittlinien 7-7 in Figur 2 bzw. 4;
- Figur 8: Einen stark vergrößerten Querschnitt sowohl des Gerüststiels in einer Ansicht gemäß der Figur 6 als auch eines in das Rohr dieses Gerüststiels bis zu dem Anschlag eines weiteren erfindungsgemäßen Gerüststiels eingesteckten, an einer Innen-Stützfläche einer der Längs-Stützeindrückungen einer der T-Eindrückungen mit korrespondierenden Stützflächen seines Stützbereichs anliegenden Rohrverbinders des weiteren Gerüststiels;
- Figur 9: Einen stark vergrößerten Querschnitt sowohl des Gerüststiels in einer Ansicht gemäß der Figur 7 als auch des in das Rohr dieses Gerüststiels bis zu dem Anschlag des weiteren Gerüststiels eingesteckten, an einer Innen-Zentrierfläche einer der Quer-Zentriereindrückungen der gleichen T-Eindrückung mit korrespondierenden Zentrierflächen seines Zentrierbereichs anliegenden Rohrverbinders des weiteren Gerüststiels;
- Figur 10: Einen stark vergrößerten, die Längsachse einer T-Eindrückung enthaltenden Längsschnitt des Gerüststiels entlang der Schnittlinien 10-10 in der Figur 4, wobei in das Rohr dieses Gerüststiels der Rohrverbinder des weiteren Gerüststiels bis zu dem Anschlag des weiteren Gerüststiels eingesteckt ist, und wobei die Längs-Mittenachsen des Rohrs des Gerüststiels und des Rohrverbinders des weiteren Gerüststiels zusammenfallen;
- Figur 11: In einer der Figur 10 entsprechenden Ansicht einen demgegenüber in Umfangsrichtung versetzten Längsschnitt durch die gleiche T-Eindrückung in einem Bereich deren Quer-Zentriereindrückung, welche die Längs-Stützeindrückung dieser T-Eindrückung in Umfangsrichtung seitlich überragt, wobei wiederum in das Rohr dieses Gerüststiels der Rohrverbinder des weiteren Gerüststiels bis zu dem Anschlag des weiteren Gerüststiels eingesteckt ist, und wobei wiederum die Längs-Mittenachsen des Rohrs des Gerüststiels und des Rohrverbinders des weiteren Gerüststiels zusammenfallen;
- Figur 12: Eine dreidimensionale Ansicht eines erfindungsgemäßen Gerüststiels, der als ein mit Rosetten versehener Vertikalstiel für ein Modulgerüst gestaltet ist;
- Figur 13: Eine Draufsicht eines mit zwei erfindungsgemäßen Gerüststielen und einem Querarm gebildeten, U-förmigen Gerüststellrahmens für ein Fassadengerüst, wobei dessen Gerüststiele jeweils mit einem erfindungsgemäßen Gerüststiel gebildet sind, an denen jeweils im Bereich des oberen Endes eine Rosette befestigt ist, wobei an dem links gezeigten Gerüststiel zwei Geländerbefestigungsvorrichtungen in einem vertikalen Abstand zueinander befestigt sind;
- Figur 14: Einen vergrößerten Ausschnitt im Bereich des oberen Endes des in Figur 13 links gezeigten Gerüststiels mit Darstellung des Anschlussknotens;
- Figur 15: Einen Querschnitt entlang der Schnittlinien 15-15 in Figur 14;
- Figur 16: Eine dreidimensionale Ansicht eines sich über vier Etagen bzw. Gerüstlagen erstreckenden Fassadengerüsts, das aus einem ersten Gerüstfeld besteht, das mit Gerüststellrahmen gemäß Figur 13 aufgebaut ist und aus einem daran angebauten zweiten Gerüstfeld besteht, das mit Vertikalstielen gemäß Figur 12 und weiteren Gerüstbauteilen eines Modulgerüsts aufgebaut ist;
- Figur 17: Eine vergrößerte Seitenansicht eines Anschlussknotens des Modulgerüsts;
- Figur 18: Einen Querschnitt entlang der Schnittlinien 18-18 in Figur 17;

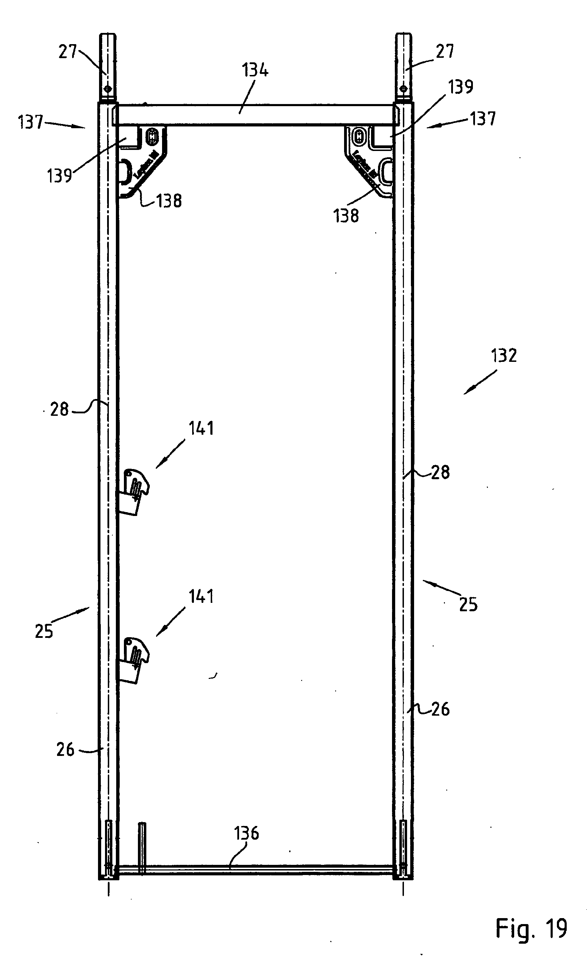

- Figur 19: Eine Draufsicht eines mit zwei Gerüststielen, einem oberen Querrigel und einem unteren Querstab gebildeten, geschlossenen Gerüststellrahmens für ein Fassadengerüst, wobei dessen Stiele mit erfindungsgemäßen Gerüststielen gebildet sind, an denen jeweils im Bereich des oberen Endes der Querriegel befestigt ist und an denen jeweils im Bereich des unteren Endes der Querstab befestigt ist, und an denen jeweils ein Knotenblech befestigt ist, das auch an dem Querriegel befestigt ist, und wobei an dem links gezeigten Gerüststiel zwei Geländerbefestigungsvorrichtungen in einem vertikalen Abstand zueinander befestigt sind;
- Figur 20: Eine dreidimensionale Ansicht eines sich über zwei Etagen bzw. Gerüstlagen erstreckenden Fassadengerüsts, das aus Gerüststellrahmen gemäß Figur 19 und weiteren Gerüstbauteilen aufgebaut ist.

Der erfindungsgemäße Gerüststiel 25 besteht aus einem Rohr 26 und aus einem daran angeformten Rohrverbinder 27, die einteilig und materialgleich aus ein und demselben Rundrohr hergestellt sind, das in den Figuren nicht gezeigt ist. Das besagte Rundrohr besteht aus Stahl. Das ursprüngliche Rundrohr hat einen Außenumfang, der in Längsrichtung durchgehend mit einer im wesentlichen kreiszylindrischen Mantelfläche begrenzt ist. Mit anderen Worten ist das Rundrohr im wesentlichen kreiszylindrisch ausgebildet. Es hat demgemäß einen im wesentlichen kreisringförmigen Querschnitt. Der im wesentlichen kreisringförmige Außenumfang des Rundrohrs spannt einen Außendurchmesser auf, der hier etwa 48,3 mm beträgt. Das Rundrohr weist eine im wesentlichen konstante Wandstärke auf, die hier etwa 2,7 mm beträgt. Demgemäß weist das Rundrohr einen im wesentlichen kreisförmigen Innenumfang auf, der einen Innendurchmesser von etwa 42,9 mm aufspannt. Ferner weist das Rundrohr eine sich parallel zu seiner Längsachse erstreckende, in Längsrichtung durchgehende Längs-Innenschweißnaht auf, die geringfügig in das Innere des Rundrohrs vorsteht. Demgemäß ist die Wandstärke des Rundrohrs im Bereich der Längs-Innenschweißnaht lokal geringfügig größer als 2,7 mm.

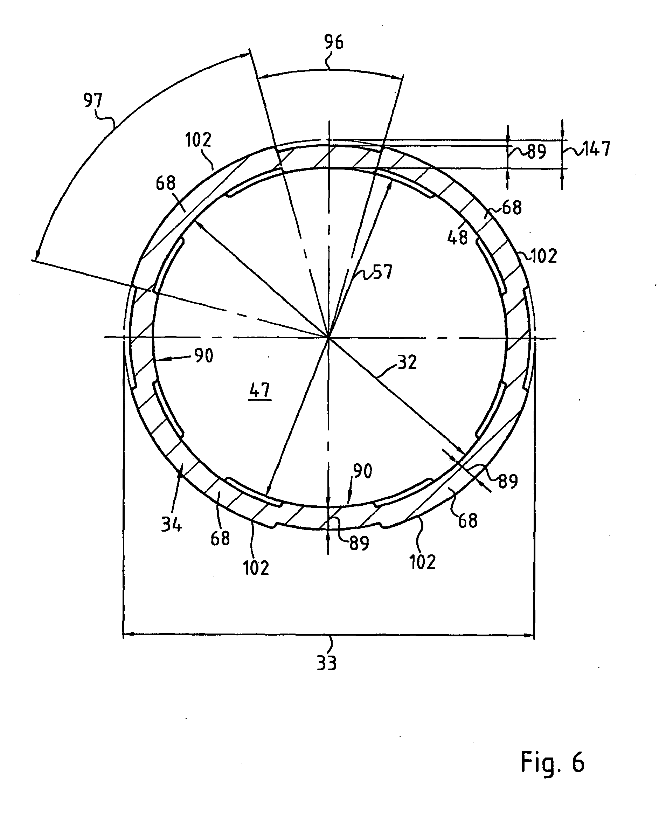

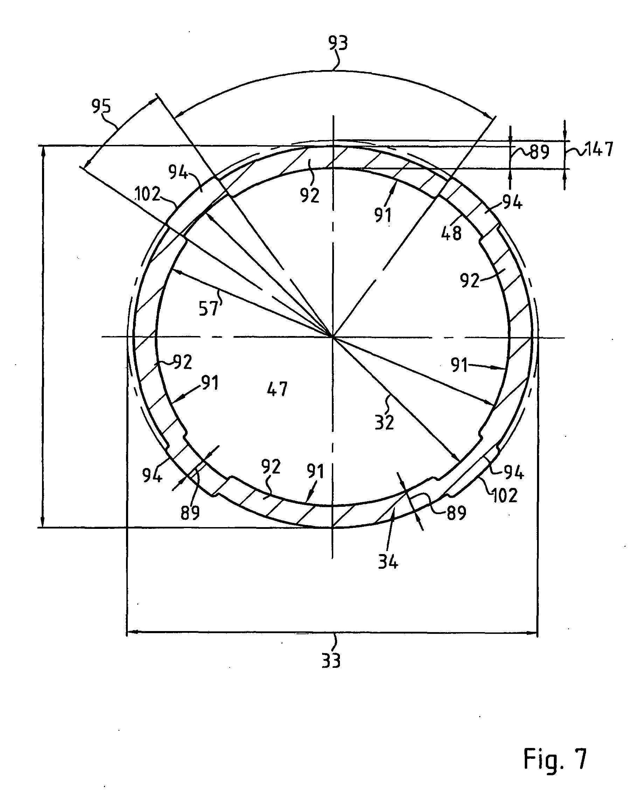

Der aus einem derartigen Rundrohr hergestellte Gerüststiel 25 besteht also ebenfalls aus Stahl. Er weist dementsprechend eine Längs-Innenschweißnaht 48 auf. Diese ist in den Figuren 6 und 7 schematisch dargestellt.

Zur Bildung des Rohrverbinders 27 wird das ursprüngliche Rundrohr an einem Rohrende über eine gewünschte Länge im Durchmesser reduziert und anschließend in einem Übergangsbereich zwischen den unterschiedlichen Außendurchmessern zur Bildung einer als Anschlag dienenden Aufstands- bzw. Aufstellfläche in Längsrichtung bzw. in axialer Richtung des Rohrs gestaucht. Dies derart, dass im Ergebnis eine senkrecht zu der Längsachse 28 des Gerüststiels 25 verlaufende, um die Längsachse 28 umlaufende, im wesentlichen kreisförmige, Stiel-Aufstell-Stirnfläche 50 zum Aufstellen eines weiteren Gerüststiels ausgebildet ist. Die Umformung des Rohrendes des ursprünglichen Rohrs erfolgt bevorzugt in einem Kaltumformverfahren, so dass der Rohrverbinder 27, vorzugsweise kalt, an dem Rohr angeformt ist.

Das Rohr 26 und der Rohrverbinder 27 erstrecken sich jeweils in Richtung der Längsachse 28 des Gerüststiels 25 und sind koaxial zu der Längsachse 28 ausgebildet bzw. angeordnet. Demgemäß fluchtet die Längsachse des Rohrverbinders mit der Längsachse des Rohrs unter Ausbildung der Längsachse 28 des Gerüststiels 25.

Der Rohrverbinder 27 weist an dem sich von dem Rohr 26 weg erstreckenden Ende des Gerüststiels ein freies erstes Rohrverbinderende 38 auf. Dieses ist mit einer, vorzugsweise angeformten, umlaufenden, ringförmigen, sich in Richtung des freien Rohrverbinderendes 38 verjüngenden Einführ-Querschnittsverjüngung 51 versehen, um das Einführen und Einstecken des Rohrverbinders in das Rohr eines auf diesen aufsteckbaren weiteren Gerüststiels zu erleichtern. Die Einführ-Querschnittsverjüngung 51 ist hier mit einem, vorzugsweise etwa 15 mm betragenden, Radius 52 gerundet gestaltet. Es versteht sich jedoch, dass die Einführ-Querschnittsverjüngung auch mit einem oder als ein Einführ-Konus und/oder als eine Fase gestaltet sein kann, der bzw. die mit im wesentlichen kreiszylindrischen Konusflächen ausgebildet sein kann. Bevorzugt wird bzw. ist die Einführ-Querschnittsverjüngung 51 im Zuge des Umformvorganges zur Bildung des Rohrverbinders 27, vorzugsweise gleichzeitig, insbesondere ebenfalls durch Kaltumformung, des ursprünglichen Rohrs hergestellt.

Der Rohrverbinder 27 ist in Richtung des Rohrs 26 mit der Stiel-Stütz-Stirnfläche 50 begrenzt, so dass der Rohrverbinder 27 dort ein zweites Rohrverbinderende 39 aufweist. Der Rohrverbinder 27 weist zwischen seinem freien ersten Rohrverbinderende 38 und seinem zweiten Rohrverbinderende 39 eine Rohrverbinderlänge 40 auf. Der Rohrverbinder 27 weist im Bereich dieser Rohrverbinderlänge 40 einen Rohrverbinder-Einsteckbereich 41 zum Einstecken des Rohrverbinders 27 in ein auf diesen aufsteckbares Rohr eines weiteren Gerüststiels auf.

Das Rohr 26 hat ein dem Rohrverbinder 27 zugeordnetes erstes Rohrende 30, das von der Stiel-Aufstell-Stirnfläche 50 begrenzt ist. Das Rohr 26 hat ferner ein von diesem Rohrende 30 weg weisendes, freies, zweites Rohrende 31, welches das andere Ende des Gerüststiels 25 bildet. Das Rohr 26 hat an seinem freien Rohrende 31 eine senkrecht zu der Längsachse 28 des Gerüststiels 25 verlaufende, umlaufende, ringförmige Rohr-Stütz-Stirnfläche 34 zum vertikalen Abstützen bzw. Aufstellen des Gerüststiels 25, beispielsweise an bzw. auf einer Stiel-Aufstell-Stirnfläche eines weiteren Gerüststiels. Das Rohr weist an seinem freien Rohrende 31 einen Rohrendabschnitt 36 auf, der sich ausgehend von der Rohr-Stütz-Stirnfläche 34 in Richtung des Rohrverbinders 27 erstreckt und der einen eine Länge 42 aufweisenden Rohr-Aufsteck-Bereich 37 zum Aufstecken des Rohrs 26 auf einen Rohrverbinder eines weiteren Gerüststiels ausbildet. Die Länge 42 des Rohr-Aufsteckbereichs 37 entspricht im wesentlichen der Länge 43 des Rohrverbinder-Einsteckbereichs 41 bzw. der Rohrverbinderlänge 40 oder im wesentlichen der wirksamen Rohrverbinderlänge 44, kann aber auch kleiner sein.

Der Rohrverbinder 27 weist in seinem Rohrverbinder-Einsteckbereich 41 einen maximalen Rohrverbinder-Außendurchmesser 56 auf, der gegenüber einem von dem Innenumfang des Rohrendabschnitts 36 des Rohrs 26 in dessen Rohraufsteckbereich 37 aufgespannten minimalen Rohrinnendurchmesser 57 verringert ist.

Das Rohr 26 ist in seinem Rohraufsteckbereich 37 in Längsrichtung 29 durchgehend mit teilkreis-zylindermantelförmigen, innere Stützflächen 60 ausbildenden, Rohr-Innenflächen begrenzt, die den minimalen Rohrinnendurchmesser 57 aufspannen.

Der Rohrverbinder 27 weist im wesentlichen über die gesamte Länge zwischen der Einführ-Querschnittsverjüngung 51 und einem sich unmittelbar an die Stiel-Aufstell-Stirnfläche 50 in Richtung des freien Rohrverbinderendes 38 anschließenden Übergangsbereich 62, durchgehend im wesentlichen kreisringförmige Außenquerschnitte auf, deren Außendurchmesser gleich groß oder kleiner ist als der maximale Rohrverbinder-Außendurchmesser 56 in dessen Rohrverbinder-Einsteckbereich 41. Der maximale Rohrverbinder-Außendurchmesser 56 ist um einen bestimmten Betrag kleiner als der minimale Rohr-Innendurchmesser 57.

Aufgrund der vorstehend beschriebenen Ausgestaltung einerseits des Rohrverbinders 27 in dessen Rohrverbinder-Einsteckbereich 41 und andererseits des Rohrs 26 in dessen Rohr-Aufsteckbereich 37, kann der Gerüststiel 25 bis zu dem durch die Stiel-Aufstell-Stirnfläche 50 gebildeten Anschlag 46 wieder lösbar unter Ausbildung eines radialen Spalts bzw. Spiels (vgl. Fig. 6 bis 9) von, vorzugsweise wenigstens etwa 2,5 bis 3,5 % des maximalen Rohrverbinder-Außendurchmessers 56 und/oder von wenigstens 1,0 mm oder von wenigstens etwa 1,3 mm, mit einem weiteren, beispielsweise erfindungsgemäßen oder gleichartigen bzw. herkömmlichen, Gerüststiel zusammen gesteckt werden, wobei der Gerüststiel während des Zusammensteckens mit dem weiteren Gerüststiel und auch in dem mit dem weiteren Gerüststiel bis zu dem Anschlag 46 zusammen gesteckten Zustand relativ zu dem weiteren Gerüststiel um die Längsachse 28 des Gerüststiels 25 frei drehbar ist.

Der Rohrverbinder 27 hat in einem Übergangsbereich 62, der sich in Richtung des freien Rohrverbinderendes 38 unmittelbar an die Stiel-Aufstell-Stirnfläche 50 anschließt, eine um die Längsachse 28 umlaufende, im wesentlichen kreisringförmige Einschnürung 62 in Form einer, insbesondere durch eine Kaltumformung hergestellten, Eindrückung. Die Einschnürung 62 weist in einem die Längsachse 28 des Gerüststiels 25 enthaltenden Längsschnitt einen U- bzw. birnenförmigen Querschnitt 63 auf. Sie spannt einen minimalen Außendurchmesser 64 auf, der geringfügig kleiner ist als der maximale Rohrverbinder-Außendurchmesser 56 des Rohrverbinders 27.

Die besagte Einschnürung 62 geht in Richtung des freien Rohrverbinderendes 38 betrachtet unmittelbar in einen Zentrierabschnitt 66 eines Zentrierbereichs 65 des Rohrverbinders 27 über, der den maximalen Rohrverbinder-Außendurchmesser 56 aufspannt. Mit anderen Worten schließt sich der Zentrierabschnitt 66 des Rohrverbinders 27 in Richtung des freien Rohrverbinderendes 38 unmittelbar an die Einschnürung 62 an. Der Zentrierabschnitt 66 erstreckt sich in Längsrichtung 29 des Rohrverbinders 27 über eine Zentrierlänge 67 durchgehend mit einem ersten Rohrverbinder-Außendurchmesser, der zugleich den maximalen Rohrverbinder-Außendurchmesser 56 bildet. Dieser Außendurchmesser 56 beträgt hier etwa 38,8 mm. Der Zentrierabschnitt 66 weist eine im wesentlichen kreiszylindrische Außenkontur auf. Seine Außenflächen bilden Zentrierflächen 59 zur Zentrierung eines auf den Rohrverbinder 27 aufsteckbaren bzw. aufgesteckten weiteren Gerüststiels aus. Die Zentrierlänge 67 beträgt hier etwa 8 mm. Der Zentrierabschnitt 66 endet in dem gezeigten Ausführungsbeispiel in einem Abstand 69, vorzugsweise von etwa 15 mm, zu der Stiel-Aufstell-Stützfläche 50.

Der Zentrierabschnitt 66 des Rohrverbinders 27 geht in Richtung des freien Rohrverbinderendes 36 betrachtet in einen sich über eine geringe Übergangslänge 71 in Längsrichtung 28 erstreckenden Übergangsbereich 70 über, in welchem sich der Außendurchmesser auf einem zweiten Rohrverbinder-Außendurchmesser 75 reduziert.

Unmittelbar an diesen Übergangsbereich 70 schließt sich in Richtung des freien Rohrverbinderendes 38 ein Stützabschnitt 72 eines Stützbereichs 73 des Rohrverbinders 27 an. Der Stützabschnitt 72 erstreckt sich in Längsrichtung 29 des Rohrverbinders 27 über eine Stützlänge 74 durchgehend mit dem zweiten Rohrverbinder-Außendurchmesser 75. Dieser beträgt hier etwa 38,0 mm. Er ist demgemäß nur geringfügig kleiner als der erste und sogleich maximale Rohrverbinder-Außendurchmesser 56 des Zentrierabschnitts 66. Der Stützabschnitt 72 weist ebenfalls eine im wesentlichen kreiszylindrische Außenkontur auf. Seine Außenflächen bilden äußere Stützflächen 59 zur seitlichen bzw. radialen Abstützung eines bzw. des auf den Rohrverbinder 27 aufsteckbaren weiteren Gerüststiels aus. Die Stützlänge 74 des Stützabschnitts 72 beträgt hier etwa 150 mm. Der Stützabschnitt 72 endet in dem gezeigten Ausführungsbeispiel in einem Abstand 44 zu der Stiel-Aufstell-Stirnfläche 50. Dieser Abstand 44 entspricht der wirksamen Rohrverbinderlänge 44 des Rohrverbinders 27. Unter der wirksamen Rohrverbinderlänge 44 ist diejenige Länge des Rohrverbinders 27 zu verstehen, über welche dieser über seine äußeren Stützflächen 58 seines Stützbereichs 73 seitlich bzw. radial Kräfte übertragen kann, insbesondere wenn auf dem Rohrverbinder 27 das Rohr eines, beispielsweise erfindungsgemäßen oder gleichartigen bzw. herkömmlichen, Gerüststiels bis zu dem Anschlag 46 aufgesteckt ist.

An den besagten Stützabschnitt 72 schließt sich in Richtung des freien Rohrverbinderendes 38 die bereits vorstehend erwähnte Einführ-Querschnittsverjüngung 51 an. Deren Länge 51 beträgt hier etwa 10 mm. Die Einführ-Querschnittsverjüngung 51 ist mit einem Radius 52 gerundet, der hier 15 mm beträgt. Die gesamte Rohrverbinder-Länge 43 beträgt im gezeigten Ausführungsbeispiel etwa 175 mm.

Der Rohrverbinder 27 weist in einem Abstand 76, vorzugsweise von etwa 35 mm, von der Stiel-Aufstell-Stirnfläche 50 zwei Durchgangsbohrungen 77.1, 77.2 mit einem, vorzugsweise etwa 13,0 mm betragenden, Innendurchmesser 78 auf. Die Mittelpunktachsen dieser Durchgangsbohrungen 77.1, 77.2 fluchten miteinander, so dass durch diese Durchgangsbohrungen 77.1, 77.2 ein nicht gezeigter Zylinderbolzen hindurch gesteckt werden kann. Derartige Durchgangsbohrungen sind ebenso bekannt, wie zwei damit korrespondierende Durchgangsbohrungen 80.1, 80.2 im unteren Rohrendabschnitt 36 des Rohrs 26. Diese sind in einem gleichen großen Abstand 81, vorzugsweise von etwa 35 mm, nunmehr von der Rohr-Stütz-Stirnfläche 34 vorgesehen sind und weisen ebenfalls den gleichen Innendurchmesser 78, vorzugsweise von 13 mm, auf.

Zusätzlich weisen sowohl der Rohrverbinder 27 als auch das Rohr 26 jeweils ein paar weitere Durchgangsbohrungen 82.1, 82.2; 83.1, 83.2 auf, die gegenüber den zuvor erwähnten Durchgangsbohrungen 77.1, 77.2; 80.1, 80.2 in Umfangsrichtung um die Längsachse 28 um einen Winkel von 90 Grad versetzt angeordnet sind. Ferner sind diese weiteren Durchgangsbohrungen 82.1, 82.2; 83.1, 83.2 jeweils in Richtung des freien Rohrverbinderendes 38 betrachtet in einem gleichen Abstand 84 bzw. 85 vorzugsweise von etwa 70 mm zu den vorgenannten Durchgangsbohrungen 77.1., 77.2; 80.1, 80.2, versetzt angeordnet. Durch diese "Kreuzbohrungen" wird besonders ökonomisch eine Verwendung der erfindungsgemäßen Gerüststiele 25 nicht nur als Gerüststandrohre, sondern auch als Hängestiele ermöglicht. Da der dafür bislang erforderliche Aufwand unter Verwendung zweier unterschiedliche Stiele bzw. Rohrverbinder, nämlich ein erster Gerüststiel mit einem angeschraubten, separaten Rohrverbinder und einem daran angehängter zweiter Gerüststiel mit einem eingepressten Rohrverbinder oder mit einem über einen Wulst angeformten Rohrverbinder, kann damit entfallen.

Wenn zwei erfindungsgemäße Gerüststiele über ihre Rohrver-binder zusammen gesteckt sind, können diese Gerüststiele relativ zueinander so weit um ihre Längsachsen 28 gedreht werden, dass die vorgenannten Durchgangsbohrungen 77.1, 77.2 und 82.1, 82.2 des ersten Rohrverbinders 27.1 mit den Durchgangsbohrungen 80.1, 80.2 und 83.1, 83.2 des 26.2 des zweiten Gerüststiels 25.2 fluchten. Dann kann sowohl durch die benachbart zu dem freien Rohrende des aufgesetzten Gerüststiels 25.2 angeordneten Durchgangsbohrungen 80.1, 80.2 nebst den damit fluchtenden Durchgangsbohrungen 77.1, 77.2 des eingesteckten Rohrverbinders als auch durch die davon in Richtung des freien Rohrverbinderendes 38 beabstandeten und um 90 Grad versetzt angeordneten Durchgangsbohrungen 80.1, 80.2 nebst den damit fluchtenden Durchgangsbohrungen des Rohrverbinders 82.1, 82.2 jeweils ein zylindrischer Befestigungsbolzen (nicht gezeigt) durchgesteckt und in bekannter Art und Weise fixiert werden.

Der Rohr-Aufsteckbereich 37 des Rohrs 26 ist mit vier T-förmigen Eindrückungen 86 versehen, deren Längsachsen 87 sich parallel zu der Längsachse 28 des Gerüststiels 25 erstrecken. Jede T-förmige Eindrückung 86, die auch mit T-Eindrückung 86 bezeichnet ist, ist jeweils mit einer Rohr-Innenquerschnitts-Verjüngung ausgebildet, ragt also in das Innere 47 des Rohrs 26 hinein. Die T-Eindrückungen 86 sind in Umfangsrichtung um die Längsachse 28 des Gerüststiels 25 in gleichen Umfangswinkeln von 90 Grad zueinander versetzt angeordnet. Sie sind also in Umfangsrichtung 88 mit gleichen Abständen zueinander angeordnet. Jede dieser T-Eindrückungen 86 besteht aus einer sich in Richtung der Längsachse 28 des Gerüststiels 25 parallel zu dieser erstreckenden Stütz-Eindrückung 90 zur seitlichen Abstützung eines in das Rohr 26 einsteckbaren bzw. eingesteckten Rohrverbinders eines weiteren Gerüststiels und bestehen ferner aus einer sich dazu im wesentlichen senkrecht erstreckenden und am freien Rohrende 31 angeordneten Quer-Zentriereindrückung 91 zur Zentrierung des in das Rohr 26 steckbaren bzw. eingesteckten Rohrverbinders des weiteren Gerüststiels. Die Quer-Zentriereindrückung 91 ist von einer Ring-Abschnitts-Fläche 92 der senkrecht zu der Längsachse 28 des Gerüststiels 25 verlaufenden Rohr-Stütz-Stirnfläche 34 begrenzt.

Die Quer-Zentriereindrückung 91 ist symmetrisch zu der Längsachse 87 der Längs-Stütz-Eindrückung 90 der T-Eindrückung 86 angeordnet, überragt also die zugehörige Längs-Stütz-Eindrückung 90 in Umfangsrichtung 88 um eine im wesentlichen gleich große Breite bzw. um im wesentlichen gleich große Umfangswinkel. Jede T-Eindrückung 86 ist also symmetrisch zu der Längsachse 87 ihrer Stütz-Eindrückung 90 bzw. symmetrisch zu der Längsachse 28 des Gerüststiels 25 angeordnet. Die Quer-Zentrier-Eindrückung 91 bzw. die zugehörige Rohr-Innenquerschnitts-Verjüngung erstreckt sich in Umfangsrichtung 88 durchgehend und die Längs-Stütz-Eindrückung 90 bzw. die zugehörige Rohr-Innenquerschnitts-Verjüngung erstreckt sich in Längsrichtung 29 durchgehend.

Die Quer-Zentrier-Eindrückung 91 bzw. die zugehörige Rohr-Innenquerschnitts-Verjüngung erstreckt sich in Umfangsrichtung um die Längsachse 28 des Gerüststiels 25 über einen Umfangswinkel 93, der hier etwa 70 Grad beträgt. Demgemäß erstreckt sich der in Umfangsrichtung 88 zwischen zwei benachbarten Quer-Zentrier-Eindrückungen 91 ausgebildete, nicht eingedrückte Rohrabschnitt 94, in Umfangsrichtung um die Längsachse 28 über einen Umfangswinkel 93, der hier etwa 20 Grad beträgt. Im Unterschied dazu erstreckt sich die Längs-Stütz-Eindrückung 90 bzw. die zugehörige Rohr-Innenquerschnitts-Verjüngung in Umfangsrichtung 88 um die Längsachse 28 über einen deutlich kleineren Umfangswinkel 96, der hier etwa 30 Grad beträgt. Demgemäß erstreckt sich der in Umfangsrichtung 88 zwischen zwei benachbarten Längs-Stütz-Eindrückungen 90 ausgebildete, nicht eingedrückte Rohrabschnitt 68, in Umfangsrichtung 88 um die Längsachse 28 über einen Umfangswinkel 97, der hier etwa 60 Grad beträgt.

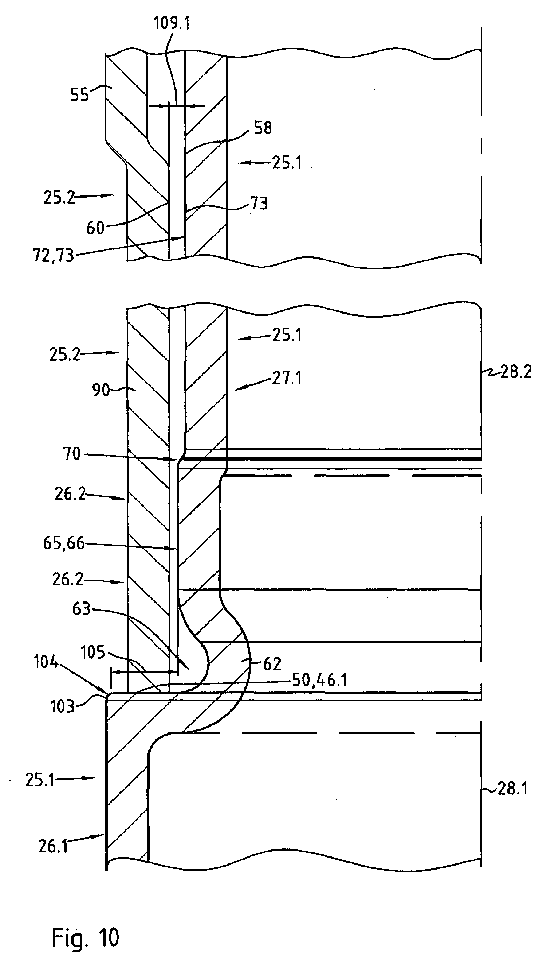

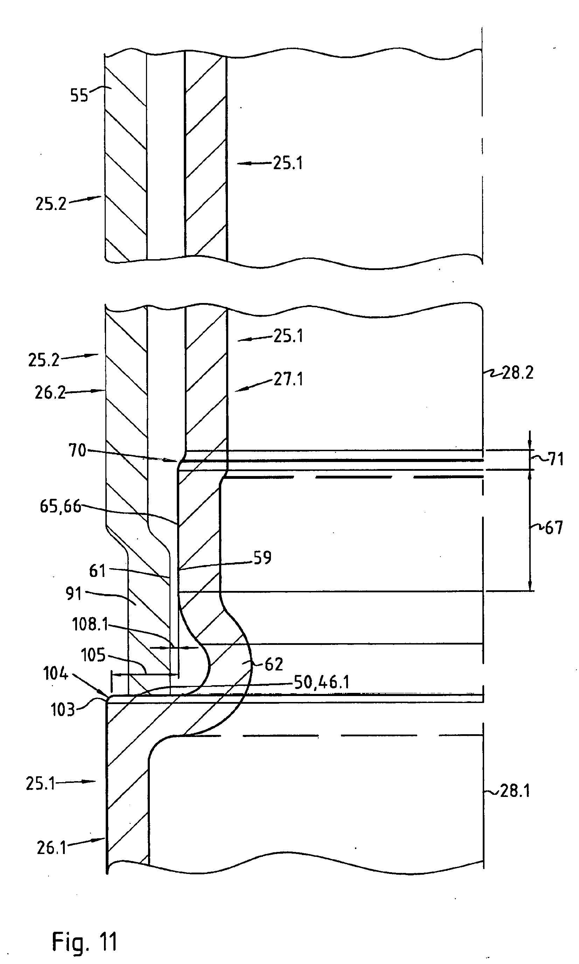

Sowohl die Quer-Zentrier-Eindrückungen 91 als auch die Längs-Stütz-Eindrückungen 90 der T-Eindrückungen 86 sind, in Umfangsrichtung 88 betrachtet, mit zylindrischen Außenflächen und mit dazu etwa parallelen zylindrischen Innenflächen begrenzt. Die besagten Außenflächen der Quer-Zentrier-Eindrückung 91 gehen fluchtend in die besagten Außenflächen der Längs-Stütz-Eindrückung 90 der jeweiligen T-Eindrückung 86 über. Die besagten Innenflächen der Quer-Zentrier-Eindrückung 91 gehen fluchtend in die besagten Innenflächen der Längs-Stütz-Eindrückung 90 der jeweiligen T-Eindrückung 86 über. In einem die Längsachse 28 enthaltenden Längsschnitt sind die besagten Innenflächen der Quer-Zentrier-Eindrückung 91 und auch die besagten Innenflächen der Längs-Stütz-Eindrückung 90 durch eine Gerade begrenzt. Das gleiche gilt für die besagten Außenflächen der Quer-Zentrier-Eindrückung 91 und die besagten Außenflächen der Längs-Stütz-Eindrückung 90 der jeweiligen T-Eindrückung 86 (vgl. Fig. 10 und 11).

Die besagten Innenflächen der Quer-Zentrier-Eindrückung 91 bilden innere Zentrierflächen 61 für einen in das Rohr 26 einsteckbaren bzw. eingesteckten weiteren Gerüststiel aus und die besagten Innenflächen der Längs-Stütz-Eindrückung 90 bilden innere Stützflächen 60 für den in das Rohr 26 einsteckbaren bzw. eingesteckten weiteren Gerüststiel aus. Die Quer-Zentriereindrückung bzw. die zugehörige Rohr-Innenquerschnitts-Verjüngung weist im wesentlichen über den gesamten Umfangsbereich, in welchen sie in Umfangsrichtung seitlich über die zugehörige Längs-Stütz-Eindrückung 90 hinaus ragt, in Längsrichtung 29 betrachtet, eine im wesentlichen konstante Länge 98 auf. Die Längs-Stütz-Eindrückung 90 bzw. die zugehörige Rohr-Innenquerschnitts-Verjüngung weist im wesentlichen über ihre gesamte Länge 99, in Umfangsrichtung betrachtet, eine im wesentlichen konstante Breite 100 auf. Die besagte Länge 98 der Quer-Zentrier-Eindrückung 91 beträgt im Ausführungsbeispiel etwa 10 mm. Die besagte Länge 99 der Längs-Stütz-Eindrückung 90 beträgt vorzugsweise etwa 140 oder etwa 150 mm. Demgemäß weist die jeweilige T-Eindrückung 86 eine, vorzugsweise etwa 150 mm oder etwa 165 mm betragende, Länge 42 auf.

Die T-Eindrückungen 86 sind bevorzugt derart angeordnet, dass sie die Längs-Innenschweißnaht 48 nicht enthalten. Mit anderen Worten ist die Längs-Innenschweißnaht 48 bevorzugt in einem nicht eingedrückten, sich in Längsrichtung 29, vorzugsweise durchgehend, erstreckenden Rohrabschnitt angeordnet und ist, in Umfangsrichtung 88 betrachtet, zwischen zwei benachbarten Quer-Zentrier-Eindrückungen 91 der benachbarten T-Eindrückungen 86 verlaufend angeordnet. Mit anderen Worten sind also die T-Eindrückungen 86 bevorzugt derart angeordnet, dass die Längs-Innenschweißnaht 48 in einem zwischen zwei benachbarten Quer-Zentrier-Eindrückungen 91 zweier benachbarter T-Eindrückungen 86 vorhandenen, nicht eingedrückten Rohrabschnitt 94, angeordnet ist bzw. verläuft.

Das Rohr 26 ist in seinem Rohr-Aufsteckbereich 37 in den nicht eingedrückten, sich in Längsrichtung 29 erstreckenden Rohrabschnitten 94, 96, in Umfangsrichtung betrachtet, zwischen den T-Eindrückungen 86, rohraußenseitig bzw. nach außen durch im wesentlichen kreiszylindermantelförmige Außenflächen 101 begrenzt. Diese Außenflächen 101 des Rohrs 26 spannen einen Rohr-Außendurchmesser auf, der dem maximalen Rohr-Außendurchmesser 33 des Rohrs 26 entspricht, der hier etwa 48,3 mm beträgt. Diese Außenflächen 101 sind die Außenflächen des ursprünglichen, noch nicht mit den T-Eindrückungen 86 versehenen Rundrohrs.

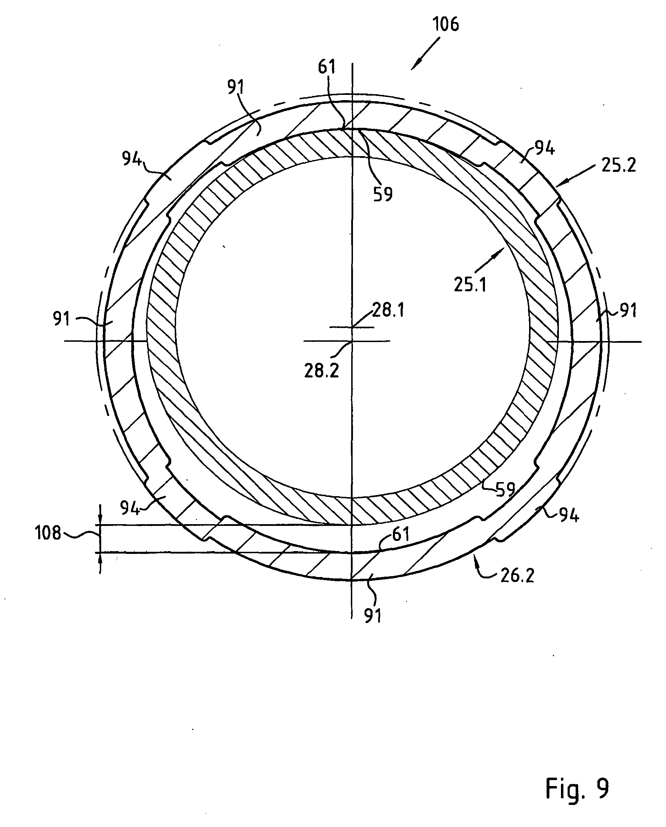

Die besagten Rohr-Außenflächen 101 der in Umfangsrichtung 88 zwischen den T-Eindrückungen 86 verlaufenden bzw. ausgebildeten, nicht eingedrückten Rohrabschnitten 94, 96 gehen im Bereich der von dem freien Rohrende 31 weg weisenden Enden der T-Eindrückungen 86 bzw. Enden deren Längs-Stütz-Eindrückungen 90 in Richtung des freien Rohrverbinderendes 38 betrachtet, in im wesentlichen kreiszylindrische Rohr-Außenflächen 54, 101 eines Rohrabschnitts 55 des Rohrs 26 über. Dort weist also das Rohr 26 einen Rohr-Außendurchmesser 33 auf, der ebenfalls dem maximalen Rohr-Außendurchmesser 33 entspricht. In dem besagten Rohrabschnitt 55 beträgt also der Rohr-Außendurchmesser 33 ebenfalls etwa 48,3 mm. Der besagte, im wesentlichen kreiszylindrische Rohrabschnitt 55 des Rohrs 26 erstreckt sich, in Längsrichtung 29 betrachtet, zwischen dem Rohr-Aufsteckbereich 37 bzw. zwischen den T-Eindrückungen 86 bzw. zwischen den besagten Enden deren Längs-Stütz-Eindrückungen 90 und einem Übergangsbereich 103 zwischen dem Rohr 26 und dem Rohrverbinder 27, hier im Bereich des dem Rohrverbinder 27 zugeordneten ersten Rohrendes 30 zwischen dem Rohr 26 und der Stiel-Aufstell-Stirnfläche 50 ausgebildet ist. Der besagte Rohrendabschnitt 55 geht im Ausführungsbeispiel, in Richtung des freien Rohrverbinderendes 38 betrachtet, wulstfrei, also ohne einen über den maximalen Rohr-Außendurchmesser 33 radial überstehenden Wulst, in die sich in Richtung des freien Rohrverbinderendes 38 betrachtet anschließende Stiel-Aufstell-Stirnfläche 50 über. Der Übergangsbereich 103 ist erfindungsgemäß mit einem möglichst kleinen Übergangsradius 104 gestaltet, der hier etwa 1,0 mm beträgt oder kleiner ist. Bevorzugt ist der Übergangsbereich 103 möglichst scharfkantig, also mit einer im wesentlichen kreisförmigen Ringkante gestaltet. Demgemäß ist der Übergangsbereich 103 bevorzugt derart gestaltet, dass eine möglichst große Stiel-Aufstell-Stirnfläche 50 erhalten bleibt. Unter Berücksichtigung der im Ausführungsbeispiel vorhandenen Durchmesserverhältnisse, d.h. bei einem maximalen Rohr-Außendurchmesser 33 des Rohrs 26 von etwa 48,3 mm und bei einem maximalen Rohrverbinder-Außendurchmesser 56 des Rohrverbinders 27 von etwa 38,8 mm, beträgt die für das Aufstellen eines weiteren Gerüststiels nutzbare maximale Aufstellbreite 104 der Stiel-Aufstell-Stirnfläche bei einem etwa 1,0 mm betragenden Übergangsradius 104 umlaufend etwa 3,75 mm (siehe Fig. 9 und 11). Im Vergleich dazu beträgt die maximale Abstützbreite 147 der an dem freien Rohrende 31 ausgebildeten, ringförmigen Rohr-Stütz-Stirnfläche 34 etwa 3,7 mm (vgl. Fig. 6 und 7). Diese Abstützbreite 147 ergibt sich rechnerisch unter Berücksichtigung der nicht eingedrückten Rohrwandteile 68, 94 die eine Wandstärke von etwa 2,7 mm aufweisen und unter Berücksichtigung der im Ausführungsbeispiel um etwa 1,0 mm radial nach innen bzw. in das Innere 47 des Rohrs 26 eingedrückten, ebenfalls eine Wandstärke von etwa 2,7 mm aufweisenden Eindrückungen. Diese maximale nutzbare Abstützbreite 147 der ringförmigen Rohr-Stütz-Stirnfläche 34 ist hier also kleiner als die korrespondierende, maximal nutzbare Aufstellbreite 105 der ringförmigen Stiel-Aufstell-Stirnfläche 50, so dass sich selbst bei einem im Rahmen des möglichen Spiels geringfügigen, seitlichen bzw. radialen Versatz zweier aufeinander gesteckter Gerüststiele, noch immer eine im wesentliche vollflächige Auflage eines auf den Rohrver-binder eines Gerüststiels aufgesteckten zweiten Gerüststiels mit seiner Rohr-Stütz-Stirnfläche auf der korrespondierenden Stiel-Aufstell-Stirnfläche des ersten Gerüststiels ergibt.

Ergänzend kann darauf hingewiesen werden, dass das Rohr 26 über seine gesamte Rohrlänge zwischen dem Übergangsbereich 103 und seinem freien Rohrende 31 mit einem einen Rohr-Außendurchmesser 33 aufspannenden, im wesentlichen konstanten Rohr-Außenquerschnitt gestaltet ist, der den einen entsprechenden Außendurchmesser aufspannenden Außenquerschnitt des ursprünglichen Rundrohrs entspricht. Ferner ist es vorteilhaft, wenn der Rohrverbinder 27 und das Rohr 26, mit Ausnahme von Übergangs- und Endbereichen, über die gesamte Länge des Gerüststiels 25 nach außen hin mit im wesentlichen kreiszylinder-mantelförmigen Außenflächen begrenzt sind.

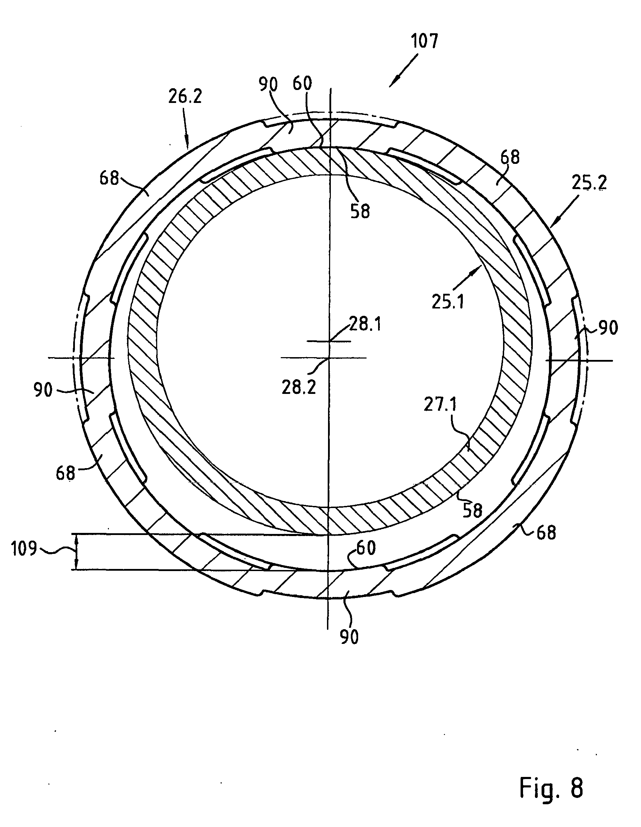

Wenn zwei erfindungsgemäße Gerüststiele 25; 25.1, 25.2 über einen ihrer Rohrverbinder 27.1 bis zu dem zugehörigen Anschlag zusammengesteckt sind, ergibt sich zwischen den Außenflächen bzw. äußeren Flächen des Rohrverbinders 27.1 eines ersten Gerüststiels 25.1 und den korrespondierenden Innenflächen bzw. inneren Flächen des Rohrs 26.2 eines zweiten Gerüststiels 25.2 in den Verbindungsbereichen 106, 107 ein bestimmtes Spiel bzw. ein bestimmter Spalt. Dieses Spiel bzw. dieser Spalt ist, in Längsrichtung 29 betrachtet, in einem Verbindungsbereich, in welchem der Rohrver-binder-Einsteckbereich 41 des Rohrverbinders 27.1 des ersten Gerüststiels 25.1 den Rohr-Aufsteckbereich 37 des darauf aufgesteckten Rohrs 26.2 des zweiten Gerüststiels 25.2 überlappt, unterschiedlich groß (vgl. Fig. 8 bis 11). Wenn der Rohrverbinder 27.1 des ersten Gerüststiels 25.1 mit den äußeren Stützflächen 58 seines Stützbereichs 73 an den korrespondierenden inneren Stützflächen 60 des Rohrs 26.2 des zweiten Gerüststiels 25.2 in einem Verbindungsbereich 107 und außerdem mit den äußeren Zentrierflächen 59 seines Zentrierbereichs 65 an den korrespondierenden inneren Zentrierflächen 61 des Rohrs 26.2 des zweiten Gerüststiels 25.2 in einem Verbindungsbereich 106, also an der Innenseite des Rohrs 26.2, anliegt, ergibt sich eine Verbindungssituation, wie sie beispielhaft in den Figuren 8 und 9 dargestellt ist. Dann ergibt sich zum einen ein maximaler radialer Zentrierspalt 108 bzw. ein entsprechendes maximales radiales Zentrierspiel 108 (siehe Fig. 9). Dieser maximale Zentrierspalt 108 bzw. dieses maximale Zentrierspiel 108 beträgt im Ausführungsbeispiel etwa 2,1 mm.

Zum anderen ergibt sich dann ein maximaler radialer Stützspalt 109 bzw. ein entsprechendes maximales radiales Stützspiel 109 (vgl. Fig. 8). Dieser maximale Stützspalt 109 bzw. dieses maximale Stützspiel 109 beträgt im Ausführungsbeispiel etwa 2,9 mm.

Dann, wenn der erste Gerüststiel 25.1 und der zweite Gerüststiel 25.2 derart aufeinander gesetzt sind, dass ihre Längsachsen 28.1, 28.2 fluchten, ergibt sich in den besagten Verbindungsbereichen 106 und 107 eine Anordnung, wie sie in den Figuren 10 und 11, wiederum im Stützbereich (Fig. 10) und im Zentrierbereich (Fig. 11) veranschaulicht ist. Der dort jeweils ausgebildete Spalt bzw. das dort jeweils ausgebildete Spiel 109.1 ist dann jeweils halb so groß, wie der besagte maximale Stützspalt bzw. das besagte maximale Stützspiel 109. Dementsprechend ist der dort jeweils ausgebildete Spalt bzw. das dort jeweils ausgebildete Spiel 108.1 ist dann jeweils halb so groß, wie der besagte maximale Zentrierspalt bzw. das besagte maximale Zentrierspiel 109.

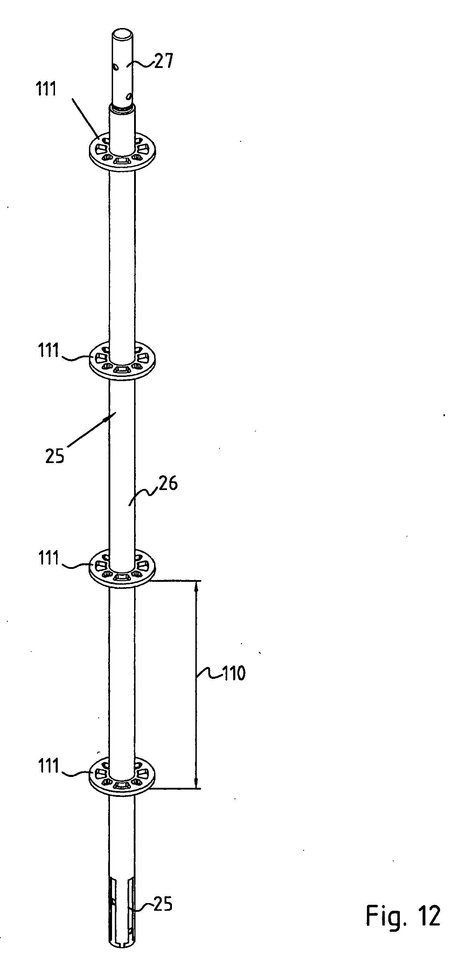

Einige typische Anwendungs- bzw. Einsatzbeispiele für die erfindungsgemäßen Gerüststiele 25, bei denen diese auch mit gleichartigen bzw. herkömmlichen Gerüststielen kombinierbar bzw. vermischbar sind, sind in den Figuren 12 bis 20 veranschaulicht.

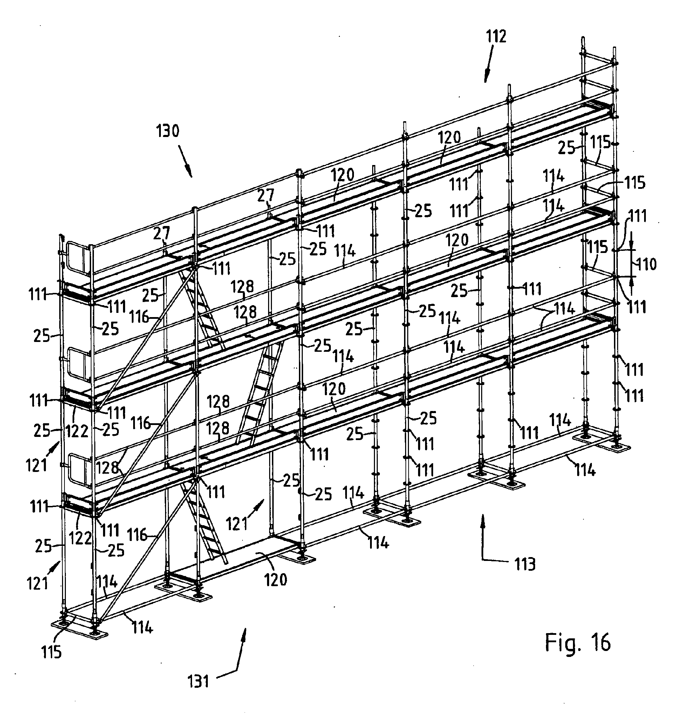

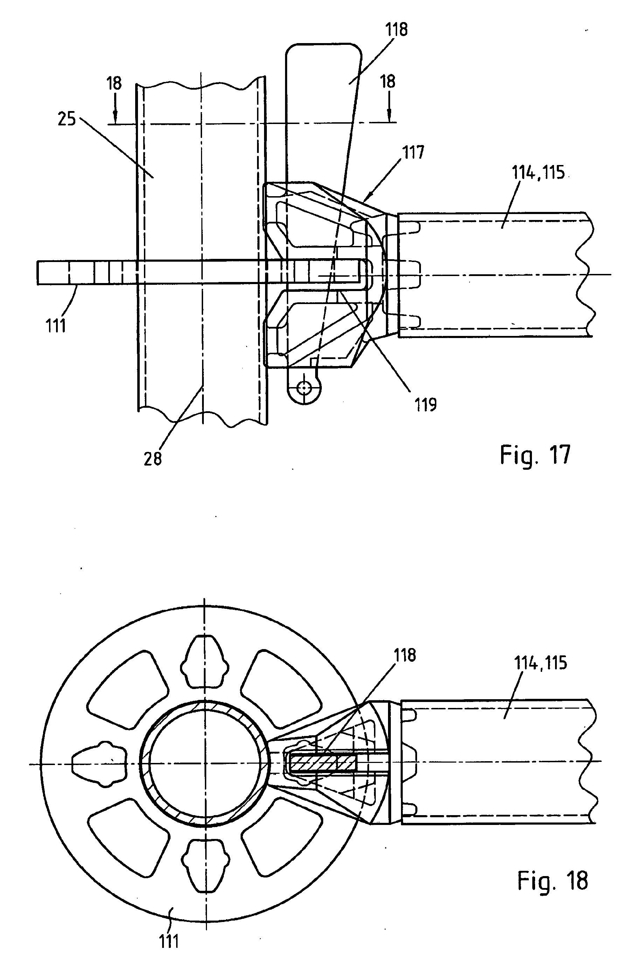

Die Figur 12 zeigt einen erfindungsgemäßen Gerüststiel 25, an dem in einem bestimmten Rastermaß entsprechenden Längsabständen 110, vorzugsweise von etwa 50 cm, Rosetten in Form vorzugsweise von Lochscheiben 111, aufgeschoben und festgeschweißt sind. Es handelt sich also um den Stiel eines Modulgerüsts, wie es beispielsweise in dem in Figur 16 rechts dargestellten Gerüstfeld 113, basierend auf den erfindungsgemäßen Gerüststielen 25 aufbaubar ist. Hierzu können in üblicher Art und Weise insbesondere Längsriegel 114, Querriegel 115 und Diagonalen 116 mit Hilfe von beiderends befestigten Anschlussköpfen 117 bzw. Keilköpfen 117 an den Lochscheiben 111 mit Hilfe ihrer Anschlusskeile 118 festgekeilt werden (Figs. 17 und 18). In üblicher Art und Weise können an den Querriegeln 115 Beläge 120 befestigt sein, beispielsweise mit Hilfe üblicher Einhängehaken bzw. Klauen. Zum Schutz gegen ein Herabfallen von Personen von den Belägen 120 können die Längsriegel 114 und die Querriegel 115 auch als Geländerstäbe bzw. -stangen fungieren. Das basierend auf den erfindungsgemäßen Gerüststielen 25 aufgebaute Modulgerüst 112 entspricht von seinem Aufbau her dem bekannten LAYHER-Allround-Modulgerüst und ist mit diesem voll kompatibel.

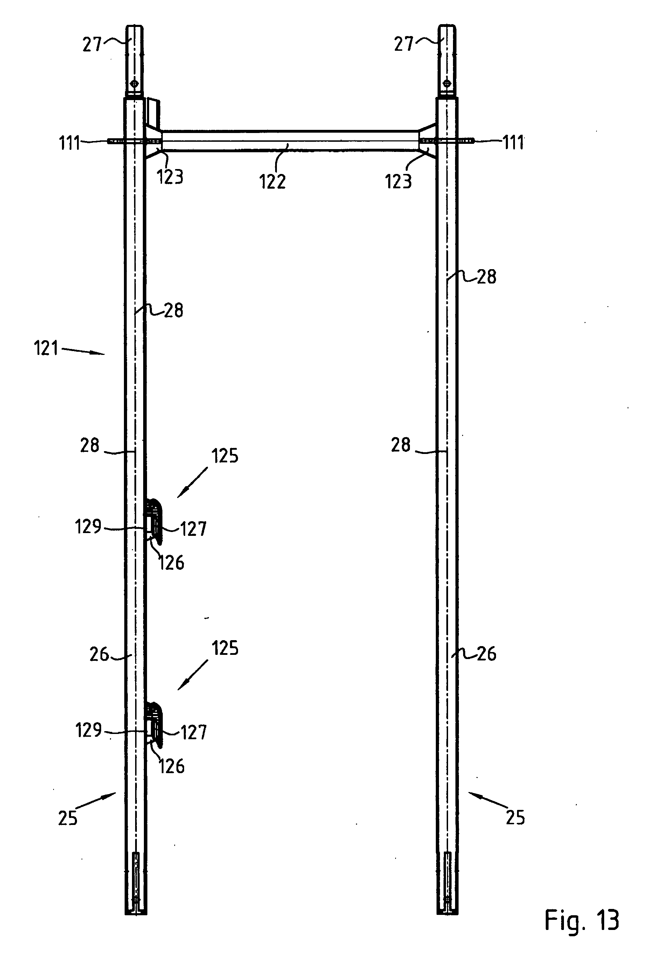

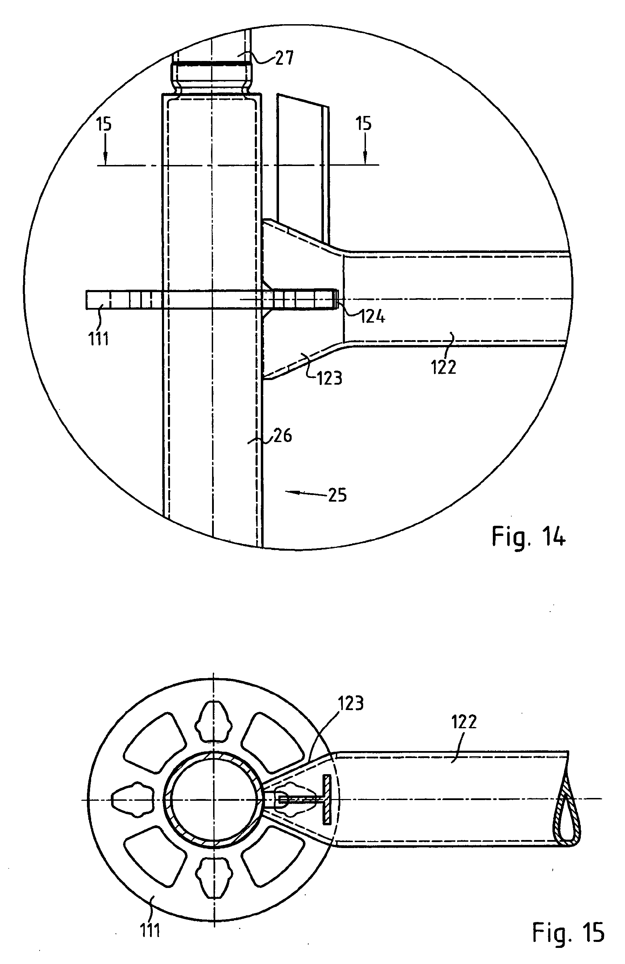

Die Figur 13 zeigt einen U-förmigen, nach unten offenen, Gerüststellrahmen 121. Er besteht aus zwei erfindungsgemäßen, parallel zueinander angeordneten Gerüststielen 25 und aus einem einzigen Querriegel 122. Der Querriegel 122 ist über die horizontale Schlitze 124 seiner beiden Anschlussköpfe 123 auf eine jeweils einzige Lochscheibe 111 des jeweiligen Gerüststiels 25 aufgesteckt (siehe auch Figs. 14 und 15). Die Lochscheibe 111 ist jeweils im oberen Endbereich des dem jeweiligen Rohrverbinder zugeordneten Rohrs 26 des jeweiligen Gerüststiels 25 angeschweißt. Der jeweilige Anschlusskopf 123 des Querriegels 122 ist sowohl an der zugehörigen Lochscheibe 111 als auch an dem zugehörigen Stiel 25 fest geschweißt. Dieser Gerüststellrahmen 121 entspricht von seinem Aufbau her dem seit einigen Jahren bekannten "LAYHER-Star-Rahmen". Der in Figur 13 links gezeigte Gerüststiel 25 hat zwei Geländerbefestigungsvorrichtungen 125, die in einem Längsabstand zueinander an diesem Gerüststiel 25 befestigt sind. Die Geländerbefestigungsvorrichtungen 125 sind jeweils mit einer, einen Vertikalschlitz aufweisenden, bügelförmigen Halterung 126 und einem Schwenkhebel 127 gestaltet, mittels dessen durch die Schlitze 129 der Halterungen 126 gesteckte Geländerstäbe 128 lösbar fixierbar sind (Fig. 16).

An den Lochscheiben 111 dieser Gerüststellrahmen 121 können Anschluss-, Halte- und/oder Tragelemente, beispielsweise Längsriegel 114, Querriegel 115 und/oder Diagonalen 116 eines bzw. des Modulgerüsts 112 über deren Anschlussköpfe 117 wieder lösbar befestigt werden. Dies und den Aufbau eines Stellrahmengerüsts 130 als Fassadengerüst, das basierend auf diesen Stellrahmen 121 aufgebaut ist, ist ebenfalls in Figur 16 veranschaulicht, und zwar in dem dort links gezeigten Gerüstfeld 131. Zum Aufbau dieses Stellrahmengerüsts 130 als Fassadengerüst können vorteilhaft Längsriegel 114, Querriegel 115 und/oder Diagonalen 116 verwendet werden, wie sie zum Aufbau des in Figur 16 im rechten Gerüstfeld 113 gezeigten Modulgerüst 112 eingesetzt bzw. einsetzbar sind.

Die Aussteifung des Stellrahmengerüsts 130 erfolgt also mittels der besagten Gerüstbauteile 115, 116, 117 des Modulgerüsts 112, indem diese mit Hilfe ihrer Anschlussköpfe 117 an den Lochscheiben 111 der Gerüststiele 25 der Stellrahmen 121 fixiert werden. Auch hier können Beläge 120 an den Querriegeln 122 der Stellrahmen 121 befestigt werden, und zwar besonders vorteilhaft auf der gleichen Höhe, wie bei dem Modulgerüst 112.

Die mit den erfindungsgemäßen Gerüststielen 25 versehenen Gerüststellrahmen 121 aufgebauten Fassadengerüste 130 sind mit den bekannten Gerüsten, die aus den bisher bekannten "LAYHER-Star-Rahmen" aufgebaut sind, ebenso voll kompatibel, wie mit dem bisherigen "LAYHER-Allround-Gerüstsystem".

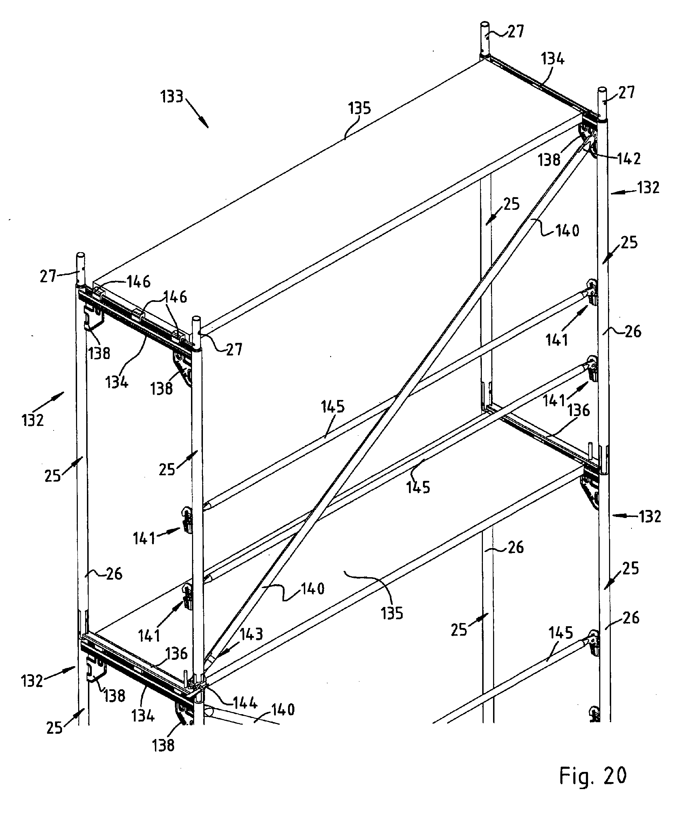

Die Figur 19 zeigt einen anderen Gerüststellrahmen 132 zum Aufbau eines anderen Fassadengerüsts 133. Dieser Gerüststellrahmen 132 ist im Unterschied zu dem in Figur 13 gezeigten Gerüststellrahmen 121 als ein geschlossenener Vertikalrahmen gestaltet. Dieser Gerüststellrahmen 132 besteht wiederum aus zwei erfindungsgemäßen, parallelen Gerüststielen 25. Die Gerüststiele 25 sind im oberen Endbereich ihrer Rohre 26 unterhalb dem jeweiligen Rohrverbinder 27 über einen Querriegel 134 und im unteren Bereich über einen Querstab 136 miteinander verbunden, der parallel zu dem Querriegel 134 angeordnet ist. Sowohl der Querriegel 134 als auch der Querstab 136 sind beiderends an dem jeweiligen Gerüststiel 25 festgeschweißt. An dem Querriegel 134 können in bekannter Weise Beläge 135 eingehängt werden (Fig. 20). Im Eckbereich 37 des Anschlusses des Querriegels 134 an dem jeweiligen Gerüststiel 25 ist unterhalb des Querriegels 134 jeweils ein so genanntes Knotenblech 138 eingeschweißt. Dieses besitzt unter anderem eine Eckausnehmung 139 zur formschlüssigen Verankerung einer Diagonale 140 (Fig. 20). An dem in Figur 19 links gezeigten Gerüststiel 25 sind vertikal bzw. in Längsrichtung zueinander beabstandet zwei Geländerbefestigungsvorrichtungen 141 befestigt. Diese sind auch unter der Bezeichnung "LAYHER-Keilkästchen" bekannt. Dieser Gerüststellrahmen 132 entspricht von seinem Aufbau her dem Gerüststellrahmen des bekannten "LAYHER-Blitz-Gerüstsystems" und ist mit diesem voll kompatibel.

Ein mit solchen Gerüstrahmen 132 aufbaubares Fassadengerüst 133 ist in Figur 20 veranschaulicht. Dieses Fassadengerüst 133 entspricht von seinem Aufbau her dem bekannten "LAYHER-Blitz-Fassadengerüst" und ist mit diesem voll kompatibel. Zum Aufbau des Gerüsts 133 sind zwei benachbarte Gerüststellrahmen 132 über eine Diagonale 140 derart ausgesteift, dass die Diagonale 140 mit ihrem Einsteckende 142 in die Eckausnehmung 139 des Knotenblechs 138 eines ersten, hier rechts gezeigten, Gerüststellrahmens 132 eingesteckt und nach Verschwenken nach unten an dem Knotenblech 138 formschlüssig verankert ist. Die Diagonale 140 ist über eine an ihrem anderen Ende 143 vorgesehene Kupplung 144, insbesondere über eine Keil-Rohrkupplung, an einem auf der gleichen Seite des Gerüsts 133 wie das zuvor erwähnte Knotenblech 138 angeordneten Gerüststiel 25 des zweiten, hier links gezeigten, Gerüststellrahmens 132 befestigt.

An den Geländerbefestigungsvorrichtungen 141 der auf der gleichen Seite des Gerüsts 133 angeordneten Stiele 25 der benachbarten Gerüststellrahmen 132 sind Geländerstäbe 145 mit ihren senkrecht abgewinkelten Ecklaschen an den bzw. in die Geländerbefestigungsvorrichtungen 141 einsteckbar und dort lösbar festkeilbar. An den, vorzugsweise mit nach oben offenen U-Profilen gestalteten, Querriegeln 34 der Gerüststellrahmen 132 können Beläge 135, vorzugsweise mit Hilfe von Einhängehaken bzw. Klauen, befestigt werden.

Die mit erfindungsgemäßen Gerüststielen 25 aufgebauten bzw. versehenen Gerüststellrahmen, beispielsweise die Gerüststellrahmen 121 und 132, sowie die mit erfindungsgemäßen Gerüststellrahmen aufgebauten Gerüste, also beispielsweise das in Figur 16 links gezeigte Stellrahmen- bzw. Fassadengerüst 131 und das in Figur 16 rechts gezeigte Modul- bzw. Fassadengerüst 112 und auch das in Figur 20 gezeigte Fassadengerüst 133, sind mit in ihrem Aufbau gleichen bzw. ähnlichen herkömmlichen Gerüststellrahmen bzw. Gerüsten, insbesondere denen der Firma LAYHER, voll kompatibel. Eine Kombination bzw. Vermischung der erfindungsgemäßen Gerüststiele 25 und der daraus aufbaubaren bzw. aufgebauten Gerüstrahmen, beispielsweise den Gerüststellrahmen 121 und 132, sowie den aus den erfindungsgemäßen Gerüstrahmen aufbaubaren bzw. aufgebauten Gerüsten, also beispielsweise den in den Figuren 16 und 20 gezeigten Gerüsten 112, 130 und 133, mit herkömmlichen Gerüststielen, herkömmlichen Gerüstrahmen, herkömmlichen weiteren Gerüstbauteilen herkömmlicher Gerüstsysteme und diesen herkömmlichen Gerüstsystemen, insbesondere denen der Firma LAYHER, ist ohne weiteres möglich, so dass ohne einen Systemwechsel oder auch system-übergreifend in besonders ökonomischer Art und Weise alte und neue Gerüststiele und daraus aufgebaute bzw. gebildete Gerüstbauteile sowie Gerüste vermisch- bzw. kombinierbar sind.

Es versteht sich, dass die Erfindung nicht auf die in den Figuren gezeigten und vorstehend beschriebenen Ausführungsbeispiele beschränkt ist, sondern dass ein erfindungsgemäßer Gerüststiel oder mehrere erfindungsgemäße Gerüststiele und daraus aufbaubare bzw. damit gebildete Gerüstrahmen und Gerüste im Rahmen des in den Ansprüchen niedergelegten Erfindungsgegenstandes auch anders ausgebildet, dimensioniert und/oder gestaltet sein kann bzw. können.

**BEZUGSZEICHENLISTE**

| | | | |
|---|---|---|---|
| 25 | Gerüststiel | 39 | zweites Rohrverbinderende |
| 25.1 | erster Gerüststiel/ weiterer Gerüststiel | 40 | Rohrverbinderlänge |
| 25.2 | zweiter Gerüststiel weiterer Gerüststiel | 41 | Rohrverbinder-Einsteckbereich |
| 26 | Rohr | 42 | Länge |
| 26.1 | Rohr | 43 | Länge |
| 26.2 | Rohr | 44 | wirksame Rohrverbinderlänge/Abstand |
| 27 | Rohrverbinder | | |
| 27.1 | Rohrverbinder | 45 | Übergangsbereich |
| 27.2 | Rohrverbinder | 46 | Anschlag |
| 28 | Längsachse | 46.1 | Anschlag |
| 28.1 | Längsachse | 47 | das "Innere" des Rohrs 26 |
| 28.2 | Längsachse | | |
| 29 | Längsrichtung | 48 | Längs-Innenschweißnaht |
| 30 | erstes Rohrende | | |
| 31 | freies/zweites Rohrende | 49 | Einführ-Querschnitts-Verjüngung |
| 32 | (maximaler) Rohr-Innendurchmesser | 50 | Stiel-Aufstell-Stirnfläche |
| 33 | (maximaler) Rohr-Außendurchmesser | 51 | Länge von 49 |
| 34 | Rohr-Stütz-Stirnfläche | 52 | Radius von 49 |
| | | 54 | Außenfläche von 55 |
| | | 55 | Rohr-Endabschnitt |
| 36 | Rohrendabschnitt | 56 | (maximaler)/erster Rohrverbinder-Außendurchmesser |
| 37 | Rohr-Aufsteckbereich | | |
| 38 | freies/erstes Rohrverbinderende | 57 | (minimaler) RohrInnendurchmesser |
| 58 | (äußere) Stützflächen von 27 | 77.2 | Durchgangsbohrung |
| | | 78 | Innendurchmesser |
| 59 | (äußere) Zentrierflächen von 27 | 80.1 | Durchgangsbohrung |
| | | 80.2 | Durchgangsbohrung |
| 60 | (innere) Stützflächen von 26 | 81 | Abstand |
| | | 82.1 | Durchgangsbohrung |
| 61 | (innere) Zentrierflächen von 26 | 82.2 | Durchgangsbohrung |
| | | 83.1 | Durchgangsbohrung |
| 62 | Übergangsbereich/ Einschnürung/ Eindrückung | 83.2 | Durchgangsbohrung |
| | | 84 | Abstand |
| | | 85 | Abstand |
| 63 | U-förmiger bzw. halbbirnenförmiger Querschnitt von 62 | 86 | Eindrückung/ T-förmige Eindrückung/ T-Eindrückung |
| 64 | (minimaler) Außendurchmesser von 62 | 87 | Längsachse von 86 |
| 65 | Zentrierbereich von 27 | 88 | Umfangsrichtung |
| 66 | Zentrierabschnitt von 27 | 89 | (Rohr) Wanddicke |
| 67 | Zentrierlänge von 66 | 90 | (Längs-)StützEindrückung |
| 68 | nicht eingedrückter Rohrabschnitt | 91 | (Quer-) Zentrier-Eindrückung |
| 69 | Abstand | 92 | Ring-Abschnitts-Fläche |
| 70 | Übergangsbereich | 93 | Umfangswinkel |
| 71 | Übergangslänge von 70 | 94 | nicht eingedrückter Rohrabschnitt |
| 72 | Stützabschnitt von 27 | | |
| 73 | Stützbereich von 27 | 95 | Umfangswinkel |
| 74 | Stützlänge von 72 | 96 | Umfangswinkel |
| 75 | zweiter Rohrverbinder-Außendurchmesser | 97 | Umfangswinkel |
| | | 98 | Länge von 91 |
| 76 | Abstand | 99 | Länge von 90 |
| 77.1 | Durchgangsbohrung | 100 | Breite von 90 |
| 101 | Rohr-Außenfläche | 122 | Querriegel |
| 102 | Rohr-Außenfläche von 68, 94 | 123 | Anschlusskopf |
| 103 | Übergangsbereich | 124 | Horizontalschlitz von 123 |
| 104 | Übergangsradius | 125 | Geländerbefestigungsvorrichtung |
| 105 | Aufstellbreite | | |
| 106 | Verbindungsbereich | 126 | Halterung |
| 107 | Verbindungsbereich | 127 | Schwenkhebel |
| 108 | (maximaler) Zentrierspalt/(maximales) Zentrierspiel | 128 | Geländerstab |
| | | 129 | Vertikalschlitz |
| | | 130 | Stellrahmengerüst/ Fassadengerüst |
| 108.1 | halber Zentrierspalt/ halbes Zentrierspiel | 131 | linkes Gerüstfeld |
| 109 | (maximaler) Stützspalt/(maximales) Stützspiel | 132 | Stellrahmen/ (geschlossener) Vertikalrahmen |
| 109.1 | halber Stützspalt/ halbes Stützspiel | 133 | Fassadengerüst |
| 110 | Rastermaß/Längsabstand | 134 | (U-)Querriegel |
| | | 135 | Belag |
| | | 136 | Querstab |
| 111 | Rosette/Lochscheibe | 137 | Eckbereich |
| 112 | Modulgerüst | 138 | Knotenblech |
| 113 | rechtes Gerüstfeld | 139 | Eckausnehmung |
| 114 | Längsriegel | 140 | Diagonale |
| 115 | Querriegel | 141 | Geländerbefestigungsvorrichtung/ Keilkästchen |
| 116 | Diagonale | | |
| 117 | Anschlusskopf/ Keilkopf | 142 | Einsteckende von 140 |
| 118 | Anschlusskeil | 143 | anderes Ende von 140 |
| 119 | Horizontalschlitz von 117 | 144 | Kupplung/ Keil-Rohrkupplung |
| 120 | Belag/Gerüstboden | 145 | Geländerstab |
| 121 | (Gerüst-) Stellrahmen | 146 | Einhängehaken/Klaue |

## Patentansprüche

1. Gerüststiel (25) aus Metall, mit einem Rohr (26) und einem daran einteilig angeformten rohrförmigen Rohrverbinder (27), die sich jeweils in Richtung einer Längsachse (28) des Gerüststiels (25) erstrecken und die koaxial zu der Längsachse (28) ausgebildet sind,
wobei das Rohr (26) ein dem Rohrverbinder (27) zugeordnetes erstes Rohrende (30), ein davon weg weisendes freies zweites Rohrende (31), einen Rohraußendurchmesser (33), einen Rohrinnendurchmesser (32, 57) und eine Rohrwanddicke (89) aufweist,
und wobei das Rohr (26) an seinem freien Rohrende (31) eine ringförmige Rohr-Stütz-Stirnfläche (34) zum vertikalen Abstützen des Gerüststiels (25) und einen eine Länge (42) aufweisenden Rohrendabschnitt (36) aufweist, der sich ausgehend von der Rohr-Stütz-Stirnfläche (34) in Richtung des Rohrverbinders (27) erstreckt und der einen Rohr-Aufsteckbereich (37) zum Aufstecken des Rohrs (26) auf einen Rohrverbinder eines weiteren Gerüststiels ausbildet,
und wobei der Rohrverbinder (27) ein freies erstes Rohrverbinderende (38), ein zweites Rohrverbinderende (39) und eine Rohrverbinderlänge (40) aufweist, wobei die Rohrverbinderenden (38, 39) einen Rohrverbinder-Einsteckbereich (41) zum Einstecken des Rohrverbinders (27) in ein auf diesen aufsteckbares Rohr eines weiteren Gerüststiels begrenzen,
und wobei der Rohr-Aufsteckbereich (37) des Rohrs (26) eine Länge (42) aufweist, die der Länge (43) des Rohrverbinder-Einsteckbereichs (41) des Rohrverbinders (27) im wesentlichen entspricht und/oder die im wesentlichen einer wirksamen Rohrverbinderlänge (44) entspricht,
und wobei der Rohrverbinder (27) in dem Rohrverbinder-Einsteckbereich (41) einen Rohrverbinder-Außendurchmesser (56, 75) aufweist, der gegenüber einem von dem Rohrendabschnitt (36) in dem Rohr-Aufsteckbereich (37) des Rohrs (26) aufgespannten Rohrinnendurchmesser (57) des Rohrs (26) verringert ist, und wobei in einem Übergangsbereich zwischen dem Rohrverbinder (27) und dem Rohr (26) ein Anschlag (46) in Form einer senkrecht zu der Längsachse (28) des Gerüststiels (25) verlaufenden, um die Längsachse (28) umlaufenden, ringförmigen Stiel-Aufstell-Stirnfläche (50) ausgebildet ist, so dass auf den Gerüststiel (25) der weitere Gerüststiel bis zu dem Anschlag (46) wiederlösbar mit einem radialen Spalt oder Spiel (108, 108.1; 109, 109.1) aufsteckbar ist,
und wobei der Rohrverbinder (27) ferner einen zwischen der Stiel-Aufstell-Stirnfläche (50) und dem freien Rohrverbinderende (38) angeordneten Rohrverbinder-Abschnitt (72) hat, der Stützflächen (58) zur seitlichen Abstützung des auf den Rohrverbinder (27) aufsteckbaren weiteren Gerüststiels aufweist, die in einem der wirksamen Rohrverbinderlänge (44) entsprechenden Abstand von der Stiel-Aufstell-Stirnfläche (50) angeordnet sind und/oder die sich bis hin zu einem der wirksamen Rohrverbinderlänge (44) entsprechenden Abstand von der Stiel-Aufstell-Stirnfläche (50) erstrecken,
und wobei die wirksame Rohrverbinderlänge (44) entweder im wesentlichen der Rohrverbinderlänge entspricht oder gegenüber der Rohrverbinderlänge (40) um die Länge (51) einer an dem freien Rohrverbinderende (38) angeordneten, sich in Richtung des freien Rohrverbinderendes (38) verjüngenden Einführ-Querschnittsverjüngung (49) reduziert ist,
und wobei der Rohr-Aufsteckbereich (37) des Rohrs (26) eine Anzahl von wenigstens zwei sich jeweils in Richtung der Längsachse (28) des Gerüststiels (25) erstreckende Eindrückungen (86) aufweist, die jeweils mit einer Rohrinnenquerschnitts-Verjüngung ausgebildet sind und die in Umfangsrichtung (88) um die Längsachse (28) des Gerüststiels (25) regelmäßig und/oder mit gleichem Abstand verteilt angeordnet sind und die sich jeweils in dem Rohr-Aufsteckbereich (37), unmittelbar ausgehend von der Rohr-Stütz-Stirnfläche (34) in Richtung des Rohrverbinders (27) durchgehend über eine Länge (42) erstrecken, die im wesentlichen oder wenigstens der wirksamen Rohrverbinderlänge (44) entspricht und die mindestens das Dreifache des maximalen Rohrverbinder-Außendurchmessers (56) und/oder mindestens 150 mm beträgt,
und wobei die in dem Rohr-Aufsteckbereich (37) in das Innere (47) des Rohrs (26) vorstehenden Eindrückungen (86) innere Stützflächen (60) zur seitlichen Abstützung des Rohrs (26) an dem in das Rohr (26) einsteckbaren Rohrverbinder des weiteren Gerüststiels aufweisen,
**dadurch gekennzeichnet,**
**dass** der Rohrverbinder (27) im Bereich der Stiel-Aufstell-Stirnfläche (50) oder benachbart zu der Stiel-Aufstell-Stirnfläche (50) einen einen ersten Rohrverbinder-Außendurchmesser (56) aufspannenden Zentrierbereich (65) zur Zentrierung des auf den Rohrverbinder (27) aufsteckbaren Rohrs des weiteren Gerüststiels aufweist und dass der Rohrverbinder (27) ferner einen sich an den Zentrierbereich (65) in Richtung des freien Rohrverbinderendes (38) anschließenden, innerhalb des Rohrverbinder-Abschnitts (72) angeordneten, die Stützflächen (58) enthaltenden und einen zweiten Rohrverbinder-Außendurchmesser (75) aufspannenden Stützbereich (73) zur seitlichen Abstützung des auf den Rohrverbinder (27) aufsteckbaren Rohrs des weiteren Gerüststiels aufweist, und dass der erste Rohrverbinder-Außendurchmesser (56) geringfügig größer ist als der zweite Rohrverbinder-Außendurchmesser (75),
und
**dass** das Rohr (26) im Bereich seines ersten Rohrendes (30) einen im wesentlichen kreiszylindrischen Rohrabschnitt (55) aufweist, der einen Rohraußendurchmesser (33) aufweist, der im wesentlichen dem von dem Rohrendabschnitt (36) aufgespannten maximalen Rohraußendurchmesser (33) entspricht und der in Richtung des freien Rohrverbinderendes (38) unmittelbar,
entweder
mit einem geringen Übergangsradius (104) gerundet, in die senkrecht zu der Längsachse (28) des Gerüststiels (25) verlaufende Stiel-Aufstell-Stirnfläche (50) übergeht, wobei der Übergangsbereich zwischen der Stiel-Aufstell-Stirnfläche (50) und dem sich daran in Richtung des freien Rohrendes (31) anschließenden zylindrischen Rohrabschnitt (55) mit dem Übergangsradius (104) gestaltet ist, der gleich oder kleiner 1,5 mm ist
oder
im wesentlichen scharfkantig über eine ringförmige Kante in die senkrecht zu der Längsachse (28) des Gerüststiels (25) verlaufende Stiel-Aufstell-Stirnfläche (50) übergeht,
und
**dass** unmittelbar an die senkrecht zu der Längsachse (28) des Gerüststiels (25) verlaufende Stiel-Aufstell-Stirnfläche (50) in Richtung des freien Rohrverbinderendes (38) anschließend zwischen der Stiel-Aufstell-Stirnfläche (50) und dem Zentrierbereich (65) des Rohrverbinders (27) eine um die Längsachse (28) umlaufende, ringförmige Einschnürung (62) in Form einer Eindrückung ausgebildet ist, wobei die Einschnürung (62) einen minimalen Außendurchmesser (64) aufspannt, der geringfügig kleiner ist als der erste Rohrverbinder-Außendurchmesser (56) in dem Zentrierbereich (65) des Rohrverbinders (27), und wobei sich der Zentrierbereich (65) des Rohrverbinders (27) in Richtung des freien Rohrverbinderendes (38) unmittelbar an die ringförmige Einschnürung (62) anschließt.

2. Gerüststiel nach Anspruch 1, **dadurch gekennzeichnet, dass** der Zentrierbereich (65) des Rohrverbinders (27) als ein im wesentlichen zylindrischer, sich in Längsrichtung (29) über eine Zentrierlänge (67) erstreckender Zentrierabschnitt (66) ausgebildet ist und/oder dass der Stützbereich (73) des Rohrverbinders (77) als ein im wesentlichen zylindrischer, sich in Längsrichtung (29) über eine Stützlänge (74) erstreckender Stützabschnitt (72) ausgebildet ist.

3. Gerüststiel nach Anspruch 2, **dadurch gekennzeichnet, dass** die Zentrierlänge (67) sehr viel kleiner ist als die Stützlänge (74).

4. Gerüststiel nach einem der vorstehenden Ansprüche, **dadurch gekennzeichnet, dass** der Übergangsbereich zwischen der senkrecht zu der Längsachse (28) des Gerüststiels (25) verlaufenden Stiel-Aufstell-Stirnfläche (50) und dem sich daran in Richtung des freien Rohrendes (31) anschließenden zylindrischen Rohrabschnitt (55) mit einem Übergangsradius (104) gestaltet ist, der gleich oder kleiner 1,0 mm ist.

5. Gerüststiel nach einem der vorstehenden Ansprüche, **dadurch gekennzeichnet, dass** dieser
entweder
mit wenigstens einem weiteren Gerüststiel (25) nach einem der vorstehenden Ansprüche zusammengesteckt ist oder
mit wenigstens einem gleichartigen und/oder herkömmlichen anderen Gerüststiel zusammengesteckt ist, der gegenüber dem Gerüststiel (25) nach einem der vorstehenden Ansprüche einen Rohrverbinder mit einem im wesentlichen gleichen Rohrverbinder-Außendurchmesser aufweist, wobei sich das Rohr und der Rohrverbinder des anderen Gerüststiels jeweils in Richtung einer Längsachse dieses anderen Gerüststiels erstrecken und koaxial zu dieser Längsachse angeordnet sind, und wobei zwischen dem Rohrverbinder und dem einen demgegenüber größeren Außendurchmesser aufweisenden Rohr des anderen Gerüststiels ein Anschlag zum Aufstellen eines Gerüststiels ausgebildet ist.

6. Gerüststiel nach einem der vorstehenden Ansprüche, **dadurch gekennzeichnet, dass** dieser einen Bestandteil eines Gerüstrahmens (121, 132) und/oder eines Gerüsts (112, 130, 133) oder eines Modulgerüsts (112) oder eines Rahmengerüsts (130, 133) bildet.

## Claims

1. Scaffolding post (25) made of metal, having a tube (26) and a tubular tube connector (27) formed onto it in one piece, which extend, in each instance, in the direction of a longitudinal axis (28) of the scaffolding post (25) and are configured coaxial to the longitudinal axis (28),
wherein the tube (26) has a first tube end (30) assigned to the tube connector (27), a free second tube end (31) that faces away from the first, an outside tube diameter (33), an inside tube diameter (32, 57), and a tube wall thickness (89),
and wherein the tube (26), at its free tube end (31), has a ring-shaped tube support face surface (34) for vertical support of the scaffolding post (25), and a tube end section (36) having a length (42), which section extends, proceeding from the tube support face surface (34), in the direction of the tube connector (27), and forms a tube mounting region (37) for mounting the tube (26) onto a tube connector of a further scaffolding post,
and wherein the tube connector (27) has a free first tube connector end (38), a second tube connector end (39), and a tube connector length (40), wherein the tube connector ends (38, 39) delimit a tube connector insertion region (41) for insertion of the tube connector (27) into a tube of a further scaffolding post, which tube can be mounted onto the connector,
and wherein the tube mounting region (37) of the tube (26) has a length (42) that essentially corresponds to the length (43) of the tube connector insertion region (41) of the tube connector (27), and/or essentially corresponds to an effective tube connector length (44),
and wherein the tube connector (27) has an outside tube connector diameter (56, 75), in the tube connector insertion region (41), that is reduced, as compared with an inside tube diameter (57) of the tube (26) spanned by the tube end section (36) in the tube mounting region (37) of the tube (26), and wherein a stop (46) in the form of a ring-shaped post set-up face surface (50) that runs perpendicular to the longitudinal axis (28) of the scaffolding post (25) and around the longitudinal axis (28) is configured in a transition region between the tube connector (27) and the tube (26), so that the further scaffolding post can be mounted onto the scaffolding post (25), all the way to the stop (46), in releasable manner, with a radial gap or play (108, 108.1; 109, 109.1),
and wherein the tube connector (27) furthermore has a tube connector section (72) disposed between the post set-up face surface (50) and the free tube connector end (38), which section has support surfaces (58) for lateral support of the further scaffolding post that can be mounted onto the tube connector (27), which surfaces are disposed at a distance from the post set-up face surface (50) that corresponds to the effective tube connector length (44), and/or extend all the way to a distance from the post set-up face surface (50) that corresponds to the effective connector length (44),
and wherein the effective tube connector length (44) either essentially corresponds to the tube connector length, or is reduced, in comparison with the tube connector length (40), by the length (51) of an introduction cross-section narrowing (49) disposed at the free tube connector end (38), narrowing in the direction of the free tube connector end (38),
and wherein the tube mounting region (37) of the tube (26) has a number of at least two indentations (86) that extend in the direction of the longitudinal axis (28) of the scaffolding post (25), in each instance, which indentations are configured with an inside tube cross-section narrowing, in each instance, and are disposed distributed about the longitudinal axis (28) of the scaffolding post (25), in the circumference direction (88), regularly and/or at the same distance, and extend, in the tube mounting region (37), in each instance, directly proceeding from the tube support face surface (34), in the direction of the tube connector (27), continuously over a length (42) that essentially or at least corresponds to the effective tube connector length (44), and amounts to at least three times the maximal outside tube connector diameter (56) and/or at least 150 mm,
and wherein the indentations (86) projecting into the interior (47) of the tube (26) in the tube mounting region (37) have inner support surfaces (60) for lateral support of the tube (26) on the tube connector of the further scaffolding post that can be inserted into the tube (26),
**characterized in that**
the tube connector (27), in the region of the post set-up face surface (50), or adjacent to the post set-up face surface (50), has a centering region (65) that spans a first outside tube connector diameter (56), for centering of the tube of the further scaffolding post that can be mounted onto the tube connector (27), and that the tube connector (27) furthermore has a support region (73) for lateral support of the tube of the further scaffolding post that can be mounted onto the tube connector (27), which region follows the centering region (65) in the direction of the free tube connector end (38), is disposed within the tube connector section (72), contains the support surfaces (58), and spans a second outside tube connector diameter (75), and that the first outside tube connector diameter (56) is slightly greater than the second outside tube connector diameter (75),
and
that the tube (26) has an essentially circular-cylindrical tube section (55) in the region of its first tube end (30), which section has an outside tube diameter (33) that essentially corresponds to the maximal outside tube diameter (33) spanned by the tube end section (36), and, in the direction of the free tube connector end (38), directly,
either
makes a transition into the post set-up face surface (50) that runs perpendicular to the longitudinal axis (28) of the scaffolding post (25), rounded at a slight transition radius (104), wherein the transition region between the post set-up face surface (50) and the cylindrical tube section (55) that follows it in the direction of the free tube end (31) is structured with the transition radius (104), which is equal to or less than 1.5 mm,
or
makes a transition into the post set-up face surface (50) that runs perpendicular to the longitudinal axis (28) of the scaffolding post (25), essentially with a sharp edge, by way of a ring-shaped edge,
and
that a ring-shaped constriction (62) that runs around the longitudinal axis (28) in the form of an indentation is configured between the post set-up face surface (50) and the centering region (65) of the tube connector (27), directly following the post set-up face surface (50) that runs perpendicular to the longitudinal axis (28) of the scaffolding post (25), in the direction of the free tube connector end (38), wherein the constriction (62) spans a minimal outside diameter (64) that is slightly less than the first outside tube connector diameter (56) in the centering region (65) of the tube connector (27), and wherein the centering region (65) of the tube connector (27) directly follows the ring-shaped constriction (62) in the direction of the free tube connector end (38).

2. Scaffolding post according to claim 1, **characterized in that** the centering region (65) of the tube connector (27) is configured as an essentially cylindrical centering section (66) that extends in the longitudinal direction (29) over a centering length (67), and/or that the support region (73) of the tube connector (77) is configured as an essentially cylindrical support section (72) that extends in the longitudinal direction (29) over a support length (74).

3. Scaffolding post according to claim 2, **characterized in that** the centering length (67) is very much smaller than the support length (74).

4. Scaffolding post according to one of the preceding claims, **characterized in that** the transition region between the post set-up face surface (50) that runs perpendicular to the longitudinal axis (28) of the scaffolding post (25), and the cylindrical tube section (55) that follows it in the direction of the free tube end (31) is structured with a transition radius (104) which is the same or smaller than 1.0 mm.

5. Scaffolding post according to one of the preceding claims, **characterized in that** it
either
is assembled to at least one further scaffolding post (25) according to one of the preceding claims,
or
is assembled to at least one similar and/or conventional other scaffolding post, which, in contrast to the scaffolding post (25) according to one of the preceding claims, has a tube connector having essentially the same outside tube connector diameter, wherein the tube and the tube connector of the other scaffolding post extend in the direction of a longitudinal axis of this other scaffolding post, in each instance, and are disposed coaxial to this longitudinal axis, and wherein a stop for setting up a scaffolding post is configured between the tube connector and the tube of the other scaffolding post that has a greater outside diameter, in comparison with the former.

6. Scaffolding post according to one of the preceding claims, **characterized in that** it forms an integral part of a scaffolding frame (121, 132) and/or of a scaffolding (112, 130, 133) or of a modular scaffolding (112) or a frame scaffolding (130, 133).

## Revendications

1. Montant d'échafaudage (25) en métal, avec un tuyau (26) et un raccord de tuyau tubulaire (27) rapporté par formage en une pièce à celui-ci, qui s'étendent respectivement dans la direction d'un axe longitudinal (28) du montant d'échafaudage (25) et qui sont réalisés coaxialement à l'axe longitudinal (28),
où le tuyau présente une première extrémité de tuyau (30) associée au raccord de tuyau (27), une seconde extrémité de tuyau (31) orientée au loin de celui-ci, un diamètre extérieur de tuyau (33), un diamètre intérieur de tuyau (32, 57) et une épaisseur de paroi de tuyau (89),
et où le tuyau (26) présente à son extrémité de tuyau libre (31) une face frontale annulaire de support de tuyau (34) pour le support vertical du montant d'échafaudage (25) et une section d'extrémité de tuyau (36) présentant une longueur (42), qui s'étend, en partant de la face frontale de support de tuyau (34) en direction du raccord de tuyau (27) et qui forme une zone d'emboîtement de tuyau (37) pour l'emboîtement du tuyau (26) sur un raccord de tuyau d'un autre montant d'échafaudage,
et où le raccord de tuyau (27) présente une première extrémité de raccord de tuyau libre (38), une seconde extrémité de raccord de tuyau (39) et une longueur de raccord de tuyau (40), où les extrémités de raccord de tuyau (38, 39) délimitent une zone d'emboîtement de raccord de tuyau (41) pour l'insertion du raccord de tuyau (27) dans un tuyau pouvant être emboîté sur celui-ci d'un autre montant d'échafaudage,
et où la zone la zone d'emboîtement de tuyau (37) du tuyau (26) présente une longueur (42) qui correspond sensiblement à la longueur (43) de la zone d'insertion de raccord de tuyau (41) du raccord de tuyau (27) et/ou qui correspond sensiblement à une longueur efficace de raccord de tuyau (44),
et où le raccord de tuyau (27) présente dans la zone d'insertion de raccord de tuyau (41) un diamètre extérieure de raccord de tuyau (56, 75) qui est réduit par rapport à un diamètre intérieur de tuyau (57) du tuyau (26) formé par la section d'extrémité de tuyau (36) dans la zone d'emboîtement de tuyau (37) du tuyau (26), et où dans une zone de transition entre le raccord de tuyau (27) et le tuyau (26), une butée (46) sous la forme d'une face frontale de montage de montant annulaire (50) s'étendant perpendiculairement à l'axe longitudinal (28) du montant d'échafaudage (25), s'étendant autour de l'axe longitudinal (28) est réalisée, de sorte que sur le montant d'échafaudage (25), l'autre montant d'échafaudage peut être emboîté jusqu'à la butée (46) de manière amovible avec une fente radiale ou jeu (108, 108.1 ; 109, 109.1),
et où le raccord de tuyau (27) comprend en outre une section de raccord de tuyau (72) disposée entre la face frontale de montage de montant (50) et l'extrémité libre de raccord de tuyau (38), qui présente des faces d'appui (58) pour l'appui latéral de l'autre montant d'échafaudage apte à être emboîté sur le raccord de tuyau (27), qui sont disposées à un écart correspondant à la longueur de raccord de tuyau efficace (44) de la face frontale de montant de montant (50) et/ou qui s'étendent jusqu'à un écart correspondant à la longueur de raccord de tuyau efficace (44) de la face frontale de montage de montant (50),
et où la longueur de raccord de tuyau efficace (44) correspond soit sensiblement à la longueur de raccord de tuyau, soit est réduite relativement à la longueur de raccord de tuyau (40) selon la longueur (51) d'un rétrécissement de section transversale d'introduction (49) disposé à l'extrémité de raccord de tuyau libre (38), rétrécissant dans la direction de l'extrémité de raccord de tuyau libre (38),
et où la zone d'emboîtement (37) du tuyau (26) présente un nombre d'au moins deux dépressions (86) s'étendant respectivement dans la direction de l'axe longitudinal (28) du montant d'échafaudage (25), qui sont réalisées chacune avec un rétrécissement de section transversale intérieure de tuyau et qui sont réparties dans la direction périphérique (88) autour de l'axe longitudinal (28) du montant d'échafaudage (25) régulièrement et/ou à un écart égal, et qui s'étendent respectivement dans la zone d'emboîtement de tuyau (37), en partant directement de la face frontale de support de tuyau (34) dans la direction du raccord de tuyau (27) d'une manière continue sur une longueur (42), qui correspond sensiblement ou au moins à la longueur de raccord de tuyau efficace (44), et qui représente au moins le triple du diamètre extérieur de raccord de tuyau maximal (56) et/ou est au moins de 150 mm,
et où les dépressions (86) faisant saillie dans la zone d'emboîtement de tuyau (37) dans l'intérieur (47) du tuyau (26) présentent des faces d'appui intérieures (60) pour le support latéral du tuyau (26) au raccord de tuyau apte à être emboîté dans le tuyau (26) de l'autre montant d'échafaudage,
**caractérisé en ce que** le raccord de tuyau (27), dans la zone de la face frontale de montage de montant (50) ou au voisinage de la face frontale de montage de montant (50) présente une zone de centrage (65) formant un premier diamètre extérieur de raccord de tuyau (56) pour le centrage du tuyau de l'autre montant d'échafaudage emboîtable sur le raccord de tuyau (27), et **en ce que** le raccord de tuyau (27) présente en outre une zone d'appui (73), faisant suite à la zone de centrage (65) dans la direction de l'extrémité de raccord de tuyau libre (38), disposée à l'intérieur de la section de raccord de tuyau (72), contenant les faces d'appui (58) et formant un deuxième diamètre extérieur de raccord de tuyau (75), pour le support latéral du tuyau emboîtable sur le raccord de tuyau (27) de l'autre montant d'échafaudage, et **en ce que** le premier diamètre extérieur de raccord de tuyau (56) est légèrement plus grand que le deuxième diamètre extérieur de raccord de tuyau (75), et
**en ce que** le tuyau (26) présente dans la zone de sa première extrémité (30) une section de tuyau (55) de forme essentiellement cylindrique de révolution avec un diamètre extérieur (33) qui correspond essentiellement au diamètre extérieur maximal (33) du tuyau présenté par la section d'extrémité de tuyau (36) et qui passe, dans la direction de l'extrémité de raccord de tuyau libre (38), directement
soit
en arrondi avec un faible rayon de transition (104), à la zone de la face frontale de montage de montant (50) s'étendant perpendiculairement à l'axe longitudinal (28) du montant d'échafaudage (25), la zone de transition entre la zone de la face frontale de montage de montant (50) et la section de tuyau (55) de forme essentiellement cylindrique de révolution qui suit dans la direction de l'extrémité libre (31) du tuyau, étant formée avec le rayon de transition (104) qui est égal à ou plus petit que 1,5 mm,
soit
avec un bord annulaire essentiellement net, à la face frontale de montage de montant (50) s'étendant perpendiculairement à l'axe longitudinal (28) du montant d'échafaudage (25),
et
**en ce qu'**un rétrécissement annulaire (62) autour de l'axe longitudinal (28), sous la forme d'un étranglement, est formé directement à la suite de la face frontale de montage de montant (50) s'étendant perpendiculairement à l'axe longitudinal (28) du montant d'échafaudage (25), dans la direction de l'extrémité de raccord de tuyau libre (38), entre la face frontale de montage de montant (50) et la zone de centrage (65) du raccord de tuyau (27), le rétrécissement (62) formant un diamètre extérieur (64) minimal qui est légèrement plus petit que le premier diamètre extérieur (56) du raccord de tuyau dans la zone de centrage (65) du raccord de tuyau (27), et la zone de centrage (65) du raccord de tuyau (27) étant située directement à la suite, dans la direction de l'extrémité libre du raccord de tuyau (38), du rétrécissement annulaire (62).

2. Montant d'échafaudage selon la revendication 1, **caractérisé en ce que** la zone de centrage (65) du raccord de tuyau (27) est réalisée sous la forme d'une section de centrage (66) sensiblement cylindrique, s'étendant dans la direction longitudinale (29) sur une longueur de centrage (67) et/ou **en ce que** la zone d'appui (73) du raccord de tuyau (77) est réalisée sous la forme d'une section d'appui (72) sensiblement cylindrique, s'étendant dans la direction longitudinale (29) sur une longueur d'appui (74).

3. Montant d'échafaudage selon la revendication 2, **caractérisé en ce que** la longueur de centrage (67) est nettement plus petite que la longueur d'appui (74).

4. Montant d'échafaudage selon l'une des revendications précédentes, **caractérisé en ce que** la zone de transition entre la face frontale de montage de montant (50) s'étendant perpendiculairement à l'axe longitudinal (28) du montant d'échafaudage (25) et le tronçon de tuyau (55) de forme essentiellement cylindrique de révolution qui suit dans la direction de l'extrémité libre (31) du tuyau, est formée avec le rayon de transition (104) qui est égal à ou plus petit que 1,0 mm.

5. Montant d'échafaudage selon l'une des revendications précédentes, **caractérisé en ce que** celui-ci
soit
est emboîté avec un autre montant d'échafaudage (25) selon l'une des revendications précédentes,
soit
est emboîté avec un autre montant d'échafaudage similaire et/ou traditionnel qui, par rapport au montant d'échafaudage (25) selon l'une des revendications précédentes, présente un raccord de tuyau avec un diamètre extérieur de raccord de tuyau sensiblement identique, le tuyau et le raccord de tuyau de l'autre montant d'échafaudage s'étendant respectivement dans la direction d'un axe longitudinal de cet autre montant d'échafaudage et sont disposés d'une manière coaxiale à cet axe longitudinal, et où est réalisée entre le raccord de tuyau et le tuyau présentant par rapport à celui un plus grand diamètre extérieur, une butée pour le montage d'un montant d'échafaudage.

6. Montant d'échafaudage selon l'une des revendications précédentes, **caractérisé en ce que** celui-ci est un composant d'un châssis d'échafaudage (121, 132) et/ou d'un échafaudage (112, 130, 133) ou d'un échafaudage à modules (112) ou d'une ossature (130, 133).
